# EUROPEAN PATENT APPLICATION

(11) **EP 4 369 500 A1**
(43) Date of publication of application: **15.05.2024**
(21) Application number: 22919907.0
(22) Date of filing: 31.10.2022
(51) Int. Cl.: H01M 50/342

(54) **BATTERY AND ELECTRICAL DEVICE**

(30) Priority: 12.01.2022 WO PCT/CN2022/071536
(71) Applicant: Contemporary Amperex Technology Co., Limited, Ningde, Fujian 352100 (CN)
(72) Inventor: YANG, Piaopiao, Ningde, Fujian 352100 (CN); LI, Yao, Ningde, Fujian 352100 (CN); CHEN, Xiaobo, Ningde, Fujian 352100 (CN); QIAN, Ou, Ningde, Fujian 352100 (CN)
(74) Representative: Ran, Handong
(86) International application number: PCT/CN2022/128748
(87) International publication number: WO 2023/134273

(57) **Abstract**

Embodiments of the present application provide a battery and an electrical device. The battery comprises: a battery cell, a first wall of the battery cell being provided with a pressure relief mechanism; a thermal management component for adjusting the temperature of the battery cell, the thermal management component being attached to a second wall of the battery cell, and the second wall being different from the first wall; and a box body, the box body comprising an electrical cavity and a collection cavity, the electrical cavity being used for accommodating the battery cell and the thermal management component, and the collection cavity being used for collecting emissions from the battery cell when the pressure relief mechanism is actuated. The battery and the electrical device provided by the embodiments of the present application can improve the safety of batteries.

## Description

### Cross-Reference to Related Application

The present application claims priority to PCT Patent Application No. PCT/CN2022/071536, entitled "BATTERY BOX, BATTERY, ELECTRICAL DEVICE, METHOD AND DEVICE FOR PREPARING BATTERY", filed on January 12, 2022, which is incorporated herein by reference in its entirety.

### Technical Field

The present application relates to the technical field of batteries, and in particular, to a battery and an electrical apparatus.

### Background

Energy conservation and emission reduction are the key to the sustainable development of the automobile industry. In this case, electric vehicles have become an important part of the sustainable development of the automobile industry because of their advantages of energy saving and environmental friendliness. For the electric vehicles, the battery technology is an important factor related to their development.

In the development of the battery technology, in addition to improving the performance of batteries, safety is also an issue that cannot be ignored. If the safety of the battery cannot be guaranteed, the battery cannot be used. Therefore, how to enhance the safety of the batteries is an urgent technical problem to be solved in the battery technology.

### Summary of The Invention

Embodiments of the present application provide a battery and an electrical apparatus, which can improve the safety of the battery.

In a first aspect, provided is a battery, including: a battery cell, a first wall of the battery cell being provided with a pressure relief mechanism; a thermal management component configured to regulate the temperature of the battery cell, the thermal management component being attached to a second wall of the battery cell, and the second wall being different from the first wall; and a box body, the box body including an electrical cavity and a collection cavity, wherein the electrical cavity is configured to accommodate the battery cell and the thermal management component, and the collection cavity is configured to collect emissions from the battery cell when the pressure relief mechanism is actuated.

Therefore, in the battery of the embodiments of the present application, since the second wall to which the thermal management component is attached is not the first wall of the battery cell that is provided with a pressure relief mechanism, when the battery cell is subjected to thermal runaway, the emissions discharged from the battery cell through the pressure relief mechanism will be discharged in a direction away from the thermal management component. Therefore, the emissions are less likely to break through the thermal management component. The thermal management component can cool the battery cell that is subjected to thermal runaway, avoiding thermal diffusion, and enhancing the safety of the battery.

In some embodiments, the area of the second wall is greater than or equal to that of the first wall. Due to the large contact area between the thermal management component and the battery cell, the effect of regulating the temperature of the battery cell is more significant when the battery cell is operating normally.

In some embodiments, the second wall is the wall of the battery cell that has the largest area, to increase the contact area between the thermal management component and the battery cell, so as to better regulate the temperature of the battery cell and improve the heating or cooling efficiency.

In some embodiments, the battery includes a plurality of rows of battery cells arranged in a first direction, and each row of battery cells of the plurality of rows of battery cells includes at least one battery cell arranged in a second direction, the first direction being perpendicular to the second direction and the second wall. In this way, the plurality of battery cells in the battery are arranged in an array, so that the assembly of the battery is facilitated, and the space utilization rate of the plurality of battery cells in the battery can also be improved.

In some embodiments, the thermal management component is attached to the second wall of the at least one battery cell of at least one row of battery cells of the plurality of rows of battery cells. In this way, there is at least one thermal management component within the battery. The thermal management component may regulate the temperature of the at least one battery cell attached thereto for temperature regulation.

In some embodiments, the battery cell includes two second walls oppositely arranged in the first direction, and on two sides of at least one row of battery cells of the plurality of rows of battery cells in the first direction, provided are the thermal management components attached to the two second walls of the at least one battery cell respectively. In this way, the temperature of one row of battery cells can be adjusted by two thermal management components at the same time, so that it is possible to improve the temperature regulation efficiency and improve the safety of the battery.

In some embodiments, among the plurality of rows of battery cells, at least two adjacent rows of battery cells are provided therebetween with the same thermal management component, so that it is possible to the temperature regulation effect.

In some embodiments, the battery includes a plurality of thermal management components arranged in the first direction, so as to improve the temperature regulation efficiency.

In some embodiments, the plurality of thermal management components are arranged at intervals in the first direction, so that at least one battery cell is arranged between two adjacent thermal management components, so that both the space utilization rate of the battery and the temperature regulation efficiency can be improved.

In some embodiments, the thermal management components are each provided with a heat exchange channel for accommodating a heat exchange medium, and the heat exchange channels of the plurality of thermal management components are in communication with each other. In this way, the plurality of thermal management components are in communication with each other, so that management and control are facilitated, and the integration and safety of the battery are improved; moreover, when the temperature of some thermal management components in the battery changes greatly, heat exchange can be realized by means of the heat exchange channels, so that the temperature difference between the plurality of thermal management components is small, and the temperature regulation efficiency is improved.

In some embodiments, the battery further includes: a support member arranged in the collection cavity, the support member being configured to increase the compressive strength of the collection cavity. Compared with a hollow cavity structure, since the support member provides a support function in the collection cavity, the collection cavity provided with the support member has a better compressive strength. In other words, when an external pressure acts on the battery, the collection cavity provided with the support member can resist most or all of the external pressure, thereby reducing or eliminating the impact of the external pressure on the battery cell, the thermal management component and other components in the electrical cavity, and improving the compression resistance and the safety performance of the battery.

In some embodiments, the support member includes a channel configured to allow at least part of the emissions to pass through. In addition to providing a support function, the support member may also be configured to form a channel through which the emissions of the battery cell pass, so as to improve the discharge efficiency of the emissions.

In some embodiments, the channel is configured to allow gases in the emissions to pass through, and a region of the support member other than the channel is configured to block solids in the emissions. The channel can allow high-temperature gases and/or high-temperature liquids in the emissions to pass through, while the other regions of the support member block high-temperature solids in the emissions. That is, the channel in the support member can filter the high-temperature solids from the emissions, block the high-temperature solids inside the support member, and prevent the high-temperature solids in the emissions from being discharged out of the box body to cause safety hazards, thereby improving the safety of the battery and the electrical apparatus where the battery is located.

In some embodiments, the support member is provided with an aperture configured to form the channel in the support member. The machining of the channel, which is formed by the aperture, is facilitated.

In some embodiments, the battery further includes: an isolation component attached to the first wall, the isolation component being configured to isolate the electrical cavity from the collection cavity. By isolating the electrical cavity from the collection cavity by means of the isolation component, it is possible to prevent at least part of the emissions from entering the electrical cavity from the collection cavity, avoiding thermal diffusion.

In some embodiments, the isolation component is provided with a pressure relief region, the pressure relief region being configured to discharge the emissions to the collection cavity through the pressure relief region when the pressure relief mechanism is actuated, thereby preventing the emissions from damaging other battery cells in the electrical cavity, avoiding thermal diffusion and thus improving the safety of the battery.

In some embodiments, the support member is arranged corresponding to a non-pressure relief region of the isolation component, so as to form a channel, through which the emissions pass, outside the support member. The support member is arranged corresponding to the non-pressure relief region, and the emissions discharged through the pressure relief region is outside the support member, thereby forming a channel, through which the emissions from the battery cell pass, outside the support member. For example, a channel may be formed between a plurality of support members or between the support member and a wall of the collection cavity such that the emissions are collected by the collection cavity.

In some embodiments, the support member abuts against the non-pressure relief region of the isolation component. The support member may be in contact with the non-pressure relief region of the isolation component, so as to ensure that the support member has a good support effect on the isolation component.

In some embodiments, the support member is provided with a first aperture, the first aperture being arranged corresponding to the pressure relief region such that the emissions passing through the pressure relief region are discharged through the first aperture. In this way, while the support member implements the support function, the first aperture of the support member also facilitates the receiving of the emissions discharged from the battery cell through the pressure relief mechanism and the pressure relief region, and the emissions can be collected into the collection cavity of the box body after passing through the first aperture, to prevent the emissions from affecting the components in the electrical cavity.

In some embodiments, the first aperture is in communication with the corresponding pressure relief region, so as to achieve a good conduction effect of the first aperture on the emissions.

In some embodiments, the cross-sectional area of the first aperture is not less than the area of the pressure relief region, so as to further improve the good conduction effect of the first aperture on the emissions, and prevent the first aperture from blocking the emissions from entering the collection cavity.

In some embodiments, the pressure relief region is a weakened region configured to be capable of being damaged when the pressure relief mechanism is actuated, such that the emissions pass through the weakened region into the collection cavity. Configuring the pressure relief region as a weakened region can make the isolation component in a relatively sealed state when the pressure relief mechanism is not actuated, for example, during normal use of the battery, effectively protecting the pressure relief mechanism from being damaged and failed due to external force. In addition, when the pressure relief mechanism is actuated, the strength of the weakened region is less than that of other regions in the isolation component except the pressure relief region, and the weakened region is thus easily damaged, so that the emissions from the battery cell provided with the pressure relief mechanism are discharged out of the electrical cavity through the weakened region, for example, may pass through the weakened region into the collection cavity.

In some embodiments, the pressure relief region is a first through hole configured such that when the pressure relief mechanism is actuated, the emissions are capable of entering the collection cavity through the first through hole. When the pressure relief region is the first through hole, the machining is facilitated, and the emissions discharged through the pressure relief mechanism can be also released more quickly.

In some embodiments, the box body further includes: a protective member configured to form the collection cavity with the isolation component. The protective member may also be configured to protect the isolation component.

In some embodiments, the support member abuts against the isolation component and/or the protective member. The support member can provide a support function for the protective member and/or the isolation component, so as to improve the overall compressive strength of the protective member and/or the isolation component. Especially, when abutting against both the protective member and the isolation component, the support member can improve the compressive strength of the protective member and the isolation component as a whole, thereby preventing external pressure from affecting the battery cell and other components in the electrical cavity.

In some embodiments, a connection surface of the support member abuts against the isolation component and/or the protective member, and a non-connection surface of the support member is provided with a second aperture to form a channel, through which the emissions pass, in the support member, so as to add a discharge path of the emissions from the battery cell.

In some embodiments, the protective member and the support member are of an integral structure, to facilitate subsequent mounting.

In some embodiments, a minimum distance between a region of the isolation component corresponding to the pressure relief mechanism and the protective member is greater than or equal to 7 mm, so as to avoid that the distance is too small to affect the actuation of the pressure relief mechanism. In addition, if the distance is set too small, the deformed isolation component will directly come into contact with the protective member below, resulting in a too small gap between the isolation component and the protective member, or even no gap, thereby affecting the discharge of the emissions from the pressure relief mechanism, so that it is likely to cause the battery cell subjected to thermal runaway to explode and cause thermal diffusion, which reduces the safety of the battery.

In some embodiments, the support member is of a hollow structure. Compared with a support member of a solid structure, the support member of the hollow structure provides support for the collection cavity and increases the compressive strength, while the weight of the support member itself is small, so that no large additional weight will be added to the battery, thereby improving the energy density of the battery.

In some embodiments, the support member is of a tubular structure having a high axial rigidity, and its radial dimension may be adapted to the height of the collection cavity, so that a good support can be provided for the collection cavity.

In some embodiments, the cross-section of the tubular structure is a polygon, and the number of sides of the polygon is greater than or equal to 4, so as to improve the stability of the tubular structure in the collection cavity.

In some embodiments, the tubular structure is strip-shaped or ring-shaped, to facilitate machining and mounting.

In some embodiments, the battery includes a plurality of tubular structures, which are arranged at intervals in the collection cavity. The plurality of support members arranged at intervals can provide uniform and comprehensive support for the collection cavity, thereby uniformly and comprehensively increasing the compressive strength of the collection cavity.

In some embodiments, the battery includes a plurality of tubular structures, which are stacked on top of each other, wherein the cross-sections of the plurality of tubular structures are in the form of a honeycomb. The arrangement of tubular support members in the form of a honeycomb having a single-point yield, high axial rigidity, and high compressive strength in the collection cavity of the box body of the battery can increase the compressive strength of the collection cavity, thereby improving the safety performance of the battery and the electrical apparatus where the battery is located.

In some embodiments, connection surfaces of two interconnected tubular structures are provided with a second through hole penetrating through the connection surfaces of the two tubular structures, the second through hole being configured to form a channel, through which the emissions pass, in the two tubular structures. A large number of support members are provided and connected to each other. In addition to providing relatively stable support for the collection cavity, the second through hole provided in the support member can provide a channel between the interconnected support members, and a channel between the support member and the collection cavity. Therefore, through this implementation, a large number of channels can be formed in the support members, the discharge path of the emissions from the battery cell in the channel can be added, the temperature of the emissions discharged from the collection cavity can be reduced, and the safety performance of the battery can be improved.

In a second aspect, provided is an electrical apparatus, including the battery described in the first aspect, the battery being configured to supply electric energy to the electrical apparatus.

In some embodiments, the electrical apparatus is a vehicle, a ship or a spacecraft.

### Description of Drawings

Fig. 1 is a schematic structural diagram of a vehicle disclosed in an embodiment of the present application;
Fig. 2 is a partial schematic structural diagram of a battery disclosed in an embodiment of the present application;
Fig. 3 is an exploded schematic structural diagram of a battery disclosed in an embodiment of the present application;
Fig. 4 is a partial schematic structural diagram of a battery disclosed in an embodiment of the present application;
Fig. 5 is a partial schematic cross-sectional view of a battery disclosed in an embodiment of the present application;
Fig. 6 is an exploded schematic structural diagram of a battery cell disclosed in an embodiment of the present application;
Fig. 7 is a schematic structural diagram of a plurality of battery cells and a thermal management component disclosed in an embodiment of the present application;
Fig. 8 is another partial schematic cross-sectional view of a battery disclosed in an embodiment of the present application;
Fig. 9 is a schematic structural diagram of several support members disclosed in an embodiment of the present application;
Fig. 10 is a schematic structural diagram of several further support members disclosed in an embodiment of the present application;
Fig. 11 is still another partial schematic cross-sectional view of a battery disclosed in an embodiment of the present application;
Fig. 12 is yet another partial schematic cross-sectional view of a battery disclosed in an embodiment of the present application;
Fig. 13 is an exploded schematic structural diagram of another battery disclosed in an embodiment of the present application;
Fig. 14 is a schematic cross-sectional view of another battery disclosed in an embodiment of the present application;
Fig. 15 is a partial schematic cross-sectional view of another battery disclosed in an embodiment of the present application;
Fig. 16 is an exploded schematic structural diagram of a collection cavity disclosed in an embodiment of the present application;
Fig. 17 is an exploded schematic structural diagram of another collection cavity disclosed in an embodiment of the present application;
Fig. 18 is a schematic cross-sectional view of still another battery disclosed in an embodiment of the present application;
Fig. 19 is a partial schematic cross-sectional view of still another battery disclosed in an embodiment of the present application;
Fig. 20 is a partial schematic cross-sectional view of a battery in a normal state disclosed in an embodiment of the present application; and
Fig. 21 is a partial schematic cross-sectional view of a battery in a thermal runaway state disclosed in an embodiment of the present application.

In the accompanying drawings, the figures are not necessarily drawn to scale.

### Detailed Description

Implementations of the present application are described in further detail below in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of error.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery cell may be cylindrical, flat, cuboid or in another shape, which will not be limited in the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box body for packaging one or more battery cells. The box body can prevent liquid or other foreign matters from affecting charging or discharging of the battery cells.

The battery cell includes an electrode assembly and an electrolytic solution, and the electrode assembly is composed of a positive electrode plate, a negative electrode plate and an separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. Taking a lithium-ion battery as an example, the positive electrode current collector may be of a material of aluminum, and the positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. The material of the negative electrode current collector may be copper, and the negative electrode active material may be carbon or silicon, etc. In order to ensure that no fusing occurs when a large current passes, there are a plurality of positive tabs which are stacked together, and there are a plurality of negative tabs which are stacked together. A material of the separator may be polypropylene (PP) or polyethylene (PE). In addition, the electrode assembly may have a wound structure or a laminated structure, and the embodiments of the present application are not limited thereto.

With the development of the battery technology, it is necessary to consider many design factors, such as energy density, cycle life, discharge capacity, C-rate and other performance parameters. In addition, the safety of the battery should also be considered.

With respect to battery cells, the main safety hazards come from the charging and discharging processes, and a suitable environmental temperature design is also required. In order to effectively avoid unnecessary losses, at least triple protection measures are generally taken for the battery cells. Specifically, the protection measures include at least a switching element, a properly selected separator material and a pressure relief mechanism. The switching element refers to an element that can stop the charging or discharging of a battery when the temperature or resistance in a battery cell reaches a certain threshold. The separator is configured to isolate the positive electrode plate from the negative electrode plate and can automatically dissolve micronsized (or even nanoscale) micropores attached thereto when the temperature rises to a certain value, thus preventing metal ions from passing through the separator and terminating the internal reaction of the battery cell.

The pressure relief mechanism refers to an element or component that is actuated to release an internal pressure or heat of the battery cell when the internal pressure or temperature reaches a predetermined threshold. The threshold design is different according to different design requirements. The threshold may depend on the material of one or more of the positive electrode plate, the negative electrode plate, the electrolytic solution and the separator in the battery cell. The pressure relief mechanism may take the form of an anti-explosion valve, an air valve, a pressure relief valve or a safety valve, etc., and may specifically adopt a pressure-sensitive or temperature-sensitive element or structure. That is, when the internal pressure or temperature of the battery cell reaches a predetermined threshold, the pressure relief mechanism performs an action or a weakened structure provided in the pressure relief mechanism is damaged, so as to form an opening or channel for releasing the internal pressure or heat.

The "actuation" mentioned in the present application means that the pressure relief mechanism acts or is activated to a certain state, such that the internal pressure and heat of the battery cell can be released. The action generated by the pressure relief mechanism may include, but not limited to, at least a part of the pressure relief mechanism being fractured, broken, torn or opened. When the pressure relief mechanism is actuated, high-temperature and high-pressure substances inside the battery cell are discharged outwards from an actuated position as emissions. In this way, the pressure and heat in the battery cell can be released at a controllable pressure or temperature, thereby avoiding potential, more serious accidents.

The emissions from the battery cell mentioned in the present application include, but are not limited to: an electrolytic solution, dissolved or split positive and negative electrode plates, fragments of a separator, high-temperature and high-pressure gas generated by reaction, flames, etc.

The pressure relief mechanism on the battery cell has an important impact on the safety of the battery. For example, when short circuit, overcharge and other phenomena occur, it may lead to thermal runaway inside the battery cell, resulting in a sudden increase in pressure or temperature. In this case, the internal pressure and heat can be released outward through the actuation of the pressure relief mechanism, to prevent the battery cell from exploding and catching fire.

In the assembly scheme of the battery, the thermal management component may be attached to the wall of the battery cell provided with the pressure relief mechanism. In this way, when the battery cell is operating normally, the thermal management component can regulate the temperature of the battery cell. However, since the pressure relief mechanism is generally arranged on the wall of the battery cell that has a small area, the effect of regulating the temperature of the battery cell is not significant when the battery cell is operating normally. Furthermore, when the battery cell is subjected to thermal runaway, for example, when the pressure relief mechanism of the battery cell is actuated, the emissions discharged from the battery cell through the pressure relief mechanism may be powerful and destructive, possibly enough to break through the thermal management component in this direction, causing safety issues.

In view of this, the present application provides a battery and an electrical apparatus. The battery includes a battery cell and a thermal management component. A first wall of the battery cell is provided with a pressure relief mechanism, and the thermal management component is attached to a second wall of the battery cell. The second wall is different from the first wall. Since the second wall to which the thermal management component is attached is not the first wall of the battery cell that is provided with a pressure relief mechanism, when the battery cell is subjected to thermal runaway, the emissions discharged from the battery cell through the pressure relief mechanism will be discharged in a direction away from the thermal management component. Therefore, the emissions are less likely to break through the thermal management component. The thermal management component can cool the battery cell that is subjected to thermal runaway, avoiding thermal diffusion, and enhancing the safety of the battery.

The technical solutions described in the embodiments of the present application are applicable to various electrical apparatus using batteries.

The electrical apparatus may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an allelectric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical apparatus is not specially limited in the embodiments of the present application.

In the following embodiments, for convenience of description, the electrical apparatus being a vehicle is taken as an example for description.

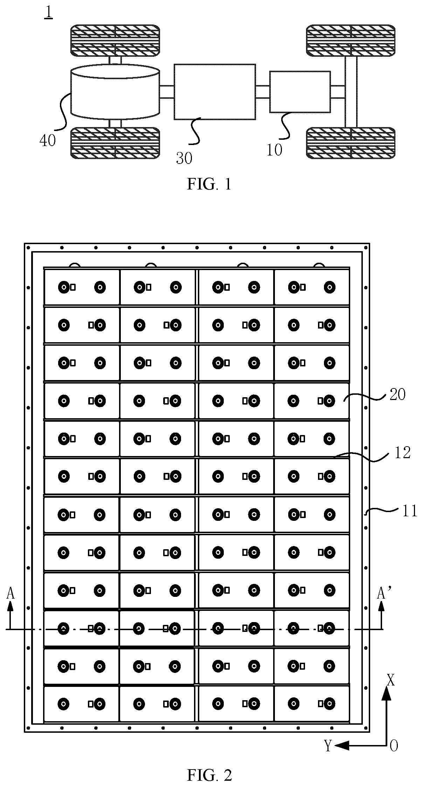

For example, Fig. 1 is a schematic structural diagram of a vehicle 1 according to an embodiment of the present application. The vehicle 1 may be a fuel vehicle, a gas vehicle or a new energy vehicle. The new energy vehicle may be a battery electric vehicle, a hybrid vehicle or an extended-range vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

In order to meet different power requirements, the battery may include a plurality of battery cells, wherein the plurality of battery cells may be in series connection, parallel connection or series-parallel connection. The series-parallel connection refers to a combination of series connection and parallel connection. The battery may also be called a battery pack. For example, the plurality of battery cells may be in series, parallel or series-parallel connection to form battery modules first, and then the plurality of battery modules may be in series, parallel or series-parallel connection to form the battery. That is, a plurality of battery cells may directly form a battery, or may first form battery modules, and then the battery modules form a battery.

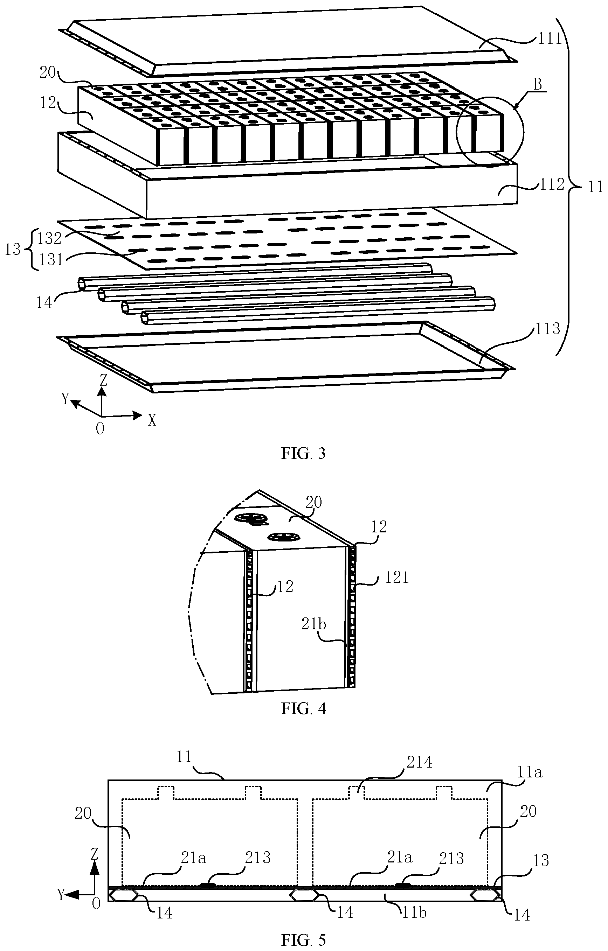

Fig. 2 shows a schematic top view of a partial structure of a battery 10 according to an embodiment of the present application; and Fig. 3 shows an exploded schematic structural diagram of a battery 10 according to an embodiment of the present application. The battery 10 shown in Fig. 2 may be part of the battery 10 shown in Fig. 3. Fig. 4 shows a partial enlarged view of a battery 10 according to an embodiment of the application. For example, Fig. 4 is an enlarged view of region B shown in Fig. 3. Fig. 5 shows a schematic cross-sectional view of a battery 10 according to an embodiment of the present application. For example, the battery 10 shown in Fig. 5 may be a schematic diagram of the battery 10 shown in Fig. 3. As shown in Figs. 2 to 5, a battery 10 according to the embodiments of the present application may include: a battery cell 20, a first wall 21a of the battery cell 20 being provided with a pressure relief mechanism 213; a thermal management component 12 configured to regulate the temperature of the battery cell 20, the thermal management component 12 being attached to a second wall 21b of the battery cell 20, and the second wall 21b being different from the first wall 21a; and a box body 11, the box body 11 including an electrical cavity 11a and a collection cavity 11b. The electrical cavity 11a is configured to accommodate the battery cell 20 and the thermal management component 12, and the collection cavity 11b is configured to collect emissions from the battery cell 20 when the pressure relief mechanism 213 is actuated.

It should be understood that the battery cell 20 in the embodiments of the present application may be shaped according to actual applications. For example, the battery cell 20 may be of a polyhedron structure, which is enclosed by a plurality of walls. Therefore, the battery cell 20 may include a plurality of walls. The first wall 21a of the battery cell 20 is provided with the pressure relief mechanism 213, and the second wall 21b of the battery cell 20 faces the thermal management component 12. The first wall 21a and the second wall 21b may be any two different walls of the battery cell 20. For example, the first wall 21a and the second wall 21b may or may not intersect, but the embodiments of the present application are not limited thereto.

It should be understood that the thermal management component 12 in the embodiments of the present application is configured to regulate the temperature of the battery cell 20. For example, the thermal management component 12 may accommodate a fluid or a solid-liquid phase change material to regulate the temperature of a plurality of battery cells 20. For another example, the thermal management component 12 may include a flow channel 121. The flow channel 121 may be configured to accommodate a fluid or a solid-liquid phase change material. Specifically, the fluid may be liquid or gas; the solid-liquid phase change material is solid in its original state, and can become liquid after absorbing heat; and regulating the temperature refers to heating or cooling the plurality of battery cells 20. In the case of cooling or reducing the temperature of the battery cells 20, the thermal management component 12 is configured to accommodate a cooling fluid or a solid-liquid phase change material to reduce the temperature of the plurality of battery cells 20. In this case, the thermal management component 12 may also be called a cooling component, a cooling system, a cooling plate, etc. The fluid accommodated by the thermal management component may also be called a cooling medium or a cooling fluid, and more specifically, may be called a cooling liquid or a cooling gas. In addition, the thermal management component 12 may also be used for heating to raise the temperature of the plurality of battery cells 20, which will not be limited in the embodiments of the present application. Optionally, the fluid may flow in a circulating manner to achieve a better temperature regulation effect. Optionally, the fluid may be water, a mixture of water and ethylene glycol, or air, etc.

It should be understood that the embodiments of the present application do not limit the connection method between the thermal management component 12 and the battery cell 20. For example, the thermal management component 12 may be fixedly connected to the battery cell 20 by means of an adhesive; or the thermal management component 12 may be clamped and fixed between two adjacent battery cells 20.

It should be understood that the electrical cavity 11a in the embodiments of the present application may be configured to accommodate the battery cell 20 and the thermal management component 12, and there is no limitation to the number of battery cells 20 and the number of thermal management components 12 accommodated. In addition, a structure for fixing the battery cell 20 and/or the thermal management component 12 may also be provided in the electrical cavity 11a.

Optionally, the electrical cavity 11a may be shaped depend on the battery cell 20 and/or thermal management component 12 accommodated therein. For example, as shown in Figs. 2 to 5, the electrical cavity 11a may be a hollow cuboid enclosed by at least six walls, so as to facilitate machining.

It should be understood that the collection cavity 11b in the embodiments of the present application is configured to collect the emissions from the battery cell 20. Specifically, the collection cavity 11b may contain air or other gases. Alternatively, the collection cavity 11b may also contain liquid, such as a cooling medium, or a component for accommodating the liquid is provided to further cool the emissions entering the collection cavity 11b. Further, optionally, the gas or the liquid in the collection cavity 11b may flow in a circulating manner.

It should be understood that the electrical cavity 11a in the embodiments of the present application may be sealed or unsealed; similarly, the collection cavity 11b in the embodiments of the present application may also be sealed or unsealed, which will not be limited in the embodiments of the present application.

Therefore, in the battery 10 of the embodiments of the present application, since the second wall 21b to which the thermal management component 12 is attached is not the first wall 21a of the battery cell 20 that is provided with the pressure relief mechanism 213, and the electrical cavity 11a may be configured to accommodate the battery cell 20 and the thermal management component 12, without the need for arranging the thermal management component 12 in the collection cavity 11b, when the battery cell 20 is subjected to thermal runaway, the emissions discharged from the battery cell 20 through the pressure relief mechanism 213 will be discharged in a direction away from the thermal management component 12. Therefore, the emissions are less likely to break through the thermal management component 12. The thermal management component 12 can cool the battery cell 20 that is subjected to thermal runaway, avoiding thermal diffusion, and enhancing the safety of the battery 10.

Optionally, the second wall 21b in the embodiments of the present application may be any wall of the battery cell 20. For example, the area of the second wall 21b is greater than or equal to that of the first wall 21a, that is, the area of the second wall 21b is not less than that of the first wall 21a. In this way, the contact area between the thermal management component 12 and the battery cell 20 is relatively large, and the effect of regulating the temperature of the battery cell 20 is more significant when the battery cell 20 is operating normally. For example, the second wall 21b may be the wall of the battery cell 20 that has the largest area, while the first wall 21a may be the wall of the battery cell 20 that has the smallest area; or the first wall 21a and the second wall 21b may have the same area, for example, they are both the walls of the battery cell 20 that have the largest area, which will not be limited in the embodiments of the present application.

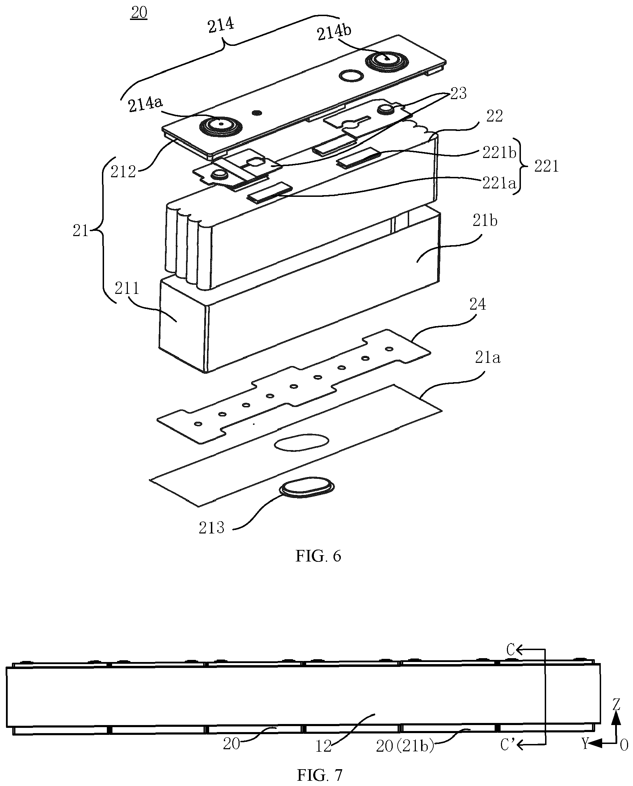

For another example, the second wall 21b is the wall of the battery cell 20 that has the largest area, to increase the contact area between the thermal management component 12 and the battery cell 20, so as to better regulate the temperature of the battery cell 20 and improve the heating or cooling efficiency. Specifically, Fig. 6 shows an exploded schematic structural diagram of a battery cell 20 according to an embodiment of the present application. For example, the battery cell 20 shown in Fig. 6 may be any battery cell 20 included in the battery 10 in Figs. 2 to 5. As shown in Fig. 6, the battery cell 20 includes a shell 21. The shell 21 may include a plurality of walls. The second wall 21b may be the wall of the battery cell 20 that has the largest area. Moreover, the battery cell 20 may include a plurality of walls having the same area. For example, if the shell 21 of the battery cell 20 is a cuboid, the battery cell 20 includes two oppositely arranged walls having the same and largest area, and the second wall 21b can be any one of the two.

The shell 21 includes a housing 211 and a cover plate 212. A wall of the housing 211 and the cover plate 212 are each referred to as a wall of the battery cell 20. The housing 211 may be shaped according to the shape of one or more inside electrode assemblies 22 after combination. For example, the housing 211 may be a hollow cuboid or cube or cylinder, and at least one surface of the housing 211 has an opening such that the one or more electrode assemblies 22 can be placed in the housing 211. For example, when the housing 211 is a hollow cuboid or cube, at least one flat surface of the housing 211 is an opening surface, i.e., the flat surface does not have a wall, so that the inside and outside of the housing 211 are in communication with each other. When the housing 211 is a hollow cylinder, each of two end surfaces of the housing 211 is an opening surface, i.e., the end surface does not have a wall, so that the inside and outside of the housing 211 are in communication with each other. At least one opening of the housing 211 can be covered by providing at least one cover plate 212, and each cover plate 212 is connected to the housing 211 to form a closed cavity in which the electrode assembly 22 is placed. The housing 211 is filled with an electrolyte, such as an electrolytic solution.

The first wall 21a of the battery cell 20 in the embodiments of the present application is provided with a pressure relief mechanism 213. The pressure relief mechanism 213 is configured, when an internal pressure or temperature of the battery cell 20 reaches a threshold, to be actuated to release the internal pressure or heat. Optionally, the first wall 21a may be any wall of the battery cell 20. For example, the first wall 21a may be the wall of the battery cell 20 that has the largest area. In this way, since the area of the second wall 21b is not less than that of the first wall 21a, the first wall 21a and the second wall 21b may have the same area and are both the walls of the battery cell 20 that have the largest area. For another example, as shown in Fig. 6, the first wall 21a may be the wall of the battery cell 20 that has the smallest area. For example, the first wall 21a may be the bottom wall of the housing 211 to facilitate mounting. For ease of illustration, the first wall 21a is separated from the housing 211 in Fig. 6, but this does not limit whether the bottom side of the housing 211 has an opening or not, that is, the bottom wall and the side wall of the housing 211 may be of an integral structure, or may be two parts which are independent of each other but are connected together.

Specifically, as shown in Fig. 6, the pressure relief mechanism 213 may be a part of the first wall 21a or is split from the first wall 21a and fixed to the first wall 21a by means of welding, for example. When the pressure relief mechanism 213 is a part of the first wall 21a, that is, the pressure relief mechanism 213 may be integrally formed with the first wall 21a, the pressure relief mechanism 213 may be formed by providing an indentation or a groove on the first wall 21a. The indentation makes the thickness of the region of the first wall 21a where the pressure relief mechanism 213 is located is less than the thickness of other regions of the first wall 21a except the pressure relief mechanism 213. When excessive gas generated by the battery cell 20 causes the internal pressure of the housing 211 to rise and reach a threshold, or the internal temperature of the battery cell 20 rises and reaches a threshold due to the heat generated by the internal reaction of the battery cell 20, the battery cell 20 may be fractured at the indentation, resulting in the communication between the inside and outside of the shell 21. The gas pressure and heat are released outward through the cracking of the pressure relief mechanism 213, thereby preventing the battery cell 20 from exploding.

Optionally, the pressure relief mechanism 213 in the embodiments of the present application may have various possible pressure relief structures, which will not be limited in the embodiments of the present application. For example, the pressure relief mechanism 213 may be a temperature-sensitive pressure relief mechanism configured to be capable of being melted when the internal temperature of the battery cell 20 provided with the pressure relief mechanism 213 reaches a threshold; and/or the pressure relief mechanism 213 may be a pressure-sensitive pressure relief mechanism configured to be capable of being fractured when an internal gas pressure of the battery cell 20 provided with the pressure relief mechanism 213 reaches a threshold.

Optionally, in an embodiment of the present application, where the pressure relief mechanism 213 is provided at the first wall 21a of the battery cell 20, a third wall of the battery cell 20 may be provided with electrode terminals 214. The third wall may be the same as or different from the first wall 21a. For example, as shown in Fig. 6, in the embodiments of the present application, an example in which the third wall is different from the first wall 21a is taken for description. For example, the third wall is arranged opposite to the first wall 21a, the first wall 21a may be the bottom wall of the battery cell 20, and the third wall may be the cover plate 212 of the battery cell 20, so that the emissions discharged from the battery cell 20 through the pressure relief mechanism 213will not affect the electrode terminals 214, avoiding a short circuit and improving the safety of the battery cell 20.

Specifically, as shown in Fig. 6, the battery cell 20 may include at least two electrode terminals 214. The at least two electrode terminals 214 may be arranged on the same wall, or may be arranged on different walls. In Fig. 6, an example is taken in which the battery cell 20 includes two electrode terminals 214, and the two electrode terminals 214 are arranged on a flat plate-shaped cover plate 212. The at least two electrode terminals 214 may include at least one positive electrode terminal 214a and at least one negative electrode terminal 214b.

The electrode terminals 214 in the embodiments of the present application are configured to be electrically connected to the electrode assembly 22 to output electric energy. For example, each electrode terminal 214 may be correspondingly provided with a connecting member 23, which may also be called a current collecting member 23, located between the cover plate 212 and the electrode assembly 22 and configured to electrically connect the electrode assembly 22 to the electrode terminal 214.

As shown in Fig. 6, each electrode assembly 22 has a first tab 221a and a second tab 222a. The first tab 221a and the second tab 222a have opposite polarities. For example, when the first tab 221a is a positive tab, the second tab 222a is a negative tab. The first tab 221a of one or more electrode assemblies 22 is connected to one electrode terminal via one connecting member 23, and the second tab 222a of one or more electrode assemblies 22 is connected to the other electrode terminal via the other connecting member 23. For example, the positive electrode terminal 214a is connected to the positive tab via one connecting member 23, and the negative electrode terminal 214b is connected to the negative tab via the other connecting member 23.

In this battery cell 20, according to actual use requirements, there may be a single or a plurality of electrode assemblies 22. As shown in Fig. 6, there are four separate electrode assemblies 22 in the battery cell 20, but the embodiments of the present application are not limited thereto.

Optionally, as shown in Fig. 6, the battery cell 20 may further include a backing plate 24. The backing plate 24 is located between the electrode assembly 22 and the bottom wall of the housing 211, can support the electrode assembly 22, and can also effectively prevent the electrode assembly 22 from interfering with rounded corners around the bottom wall of the housing 211. In addition, the backing plate 24 may be provided with one or more through holes, e.g., the backing plate may be provided with a plurality of uniformly arranged through holes, or when the pressure relief mechanism 213 is provided on the bottom wall of the housing 211, through holes are formed at positions corresponding to the pressure relief mechanism 213 for facilitating the guiding of liquid and gas. Specifically, this can communicate spaces of an upper surface and a lower surface of the backing plate 24, and gas generated inside the battery cell 20 and the electrolytic solution can freely pass through the backing plate 24.

It should be understood that, for ease of description, in the embodiments of the present application, an example in which the second wall 21b is the wall of the battery cell 20 that has the largest area is mainly taken for description. As shown in Figs. 2 to 6, the battery 10 includes a plurality of rows of battery cells 20 arranged in the first direction X, and each row of battery cells 20 of the plurality of rows of battery cells 20 includes at least one battery cell 20 arranged in a second direction Y The first direction X is perpendicular to the second direction Y and the second wall 21b. In this way, the plurality of battery cells 20 in the battery 10 are arranged in an array, so that the assembly of the battery 10 is facilitated, and the space utilization rate of the plurality of battery cells 20 in the battery 10 can also be improved. Since the first direction X is perpendicular to the second wall 21b, when the thermal management component 12 is attached to the second wall 21b, the first direction X is also perpendicular to the thermal management component 12.

Optionally, the thermal management component 12 is attached to the second wall 21b of the at least one battery cell 20 of at least one row of battery cells 20 of the plurality of rows of battery cells 20. For the plurality of rows of battery cells 20, the at least one battery cell 20 of at least one row of battery cells 20 is correspondingly provided with a thermal management component 12. The thermal management component 12 may regulate the temperature of the at least one battery cell 20 attached thereto. In this way, there is at least one thermal management component 12 inside the battery 10, and each thermal management component 12 may be configured to regulate the temperature of at least one battery cell 20.

In the embodiments of the present application, the battery cells 20 include two second walls 21b oppositely arranged in the first direction X, and on two sides of at least one row of battery cells 20 of the plurality of rows of battery cells 20 in the first direction X, provided are the thermal management components 12 attached to the two second walls 21b of the at least one battery cell 20 respectively. Among the plurality of rows of battery cells 20, there is at least one row of battery cells 20 satisfying that for any row of battery cells 20 of the at least one row of battery cells 20, the row of battery cells 20 includes two second walls 21b oppositely arranged in the first direction X, and the two second walls 21b are each correspondingly provided with a thermal management component 12, that is, the row of battery cells 20 is clamped between the two thermal management components 12. Therefore, the two thermal management components 12 can simultaneously regulate the temperature of this row of battery cells 20, so that it is possible to improve the temperature regulation efficiency and improve the safety of the battery 10. For example, if each row of battery cells 20 of the plurality of rows of battery cells 20 in the battery 10 is provided with two thermal management components 12, the temperature regulation efficiency can be greatly improved. For example, when a battery cell 20 is subjected to thermal runaway, it can be cooled more effectively, thereby avoiding thermal diffusion and improving the safety of the battery 10.

In the embodiments of the present application, among the plurality of rows of battery cells 20, at least two adjacent rows of battery cells 20 are provided therebetween with the same thermal management component 12. In this way, among the plurality of battery cells 20, there are two adjacent rows of battery cells 20 satisfying that the two rows of battery cells 20 are provided therebetween with the same thermal management component 12, so as to facilitate the manufacture and assembly of the battery 10. For example, in the first direction X, there may be some of the battery cells 20 satisfying that two adjacent rows of battery cells 20 are provided therebetween with the same thermal management component 12; and there are also some of the battery cells 20 satisfying that two adjacent rows of battery cells 20 are provided therebetween with no thermal management component 12, improving the space utilization rate in the battery 10. For another example, as shown in Figs. 2 to 6, it is also possible that among the plurality of rows of battery cells 20, every two adjacent rows of battery cells 20 are provided therebetween with a thermal management component 12, so that each battery cell 20 corresponds to at least two thermal management components 12, thereby improving the temperature regulation effect.

It should be understood that the number of thermal management components 12 in the battery 10 of the embodiment of the present application may be set according to actual applications. For example, the number of thermal management components 12 in the battery 10 may be selected based on the size and number of battery cells 20.

For example, the battery 10 includes a plurality of thermal management components 12 arranged in the first direction X, so as to improve the temperature regulation efficiency.

For another example, as shown in Figs. 2 to 6, the plurality of thermal management components 12 are arranged at intervals in the first direction X, so that at least one battery cell 20 is arranged between two adjacent thermal management components 12, so that both the space utilization rate of the battery 10 and the temperature regulation efficiency can be improved.

In the embodiments of the present application, the thermal management components 12 are each provided with a heat exchange channel for accommodating a heat exchange medium, and the heat exchange channels of the plurality of thermal management components 12 are in communication with each other. In this way, the plurality of thermal management components 12 are in communication with each other, so that management and control are facilitated, and the integration and safety of the battery 10 are improved; moreover, when the temperature of some thermal management components 12 in the battery 10 changes greatly, heat exchange can be realized by means of the heat exchange channels, so that the temperature difference between the plurality of thermal management components 12 is small, and the temperature regulation efficiency is improved. Furthermore, each thermal management component 12 may also be provided with a plurality of heat exchange channels. The plurality of heat exchange channels are arranged at intervals in a height direction Z, so as to increase the heat exchange area between the thermal management component 12 and the battery cell 20 and improve the temperature regulation efficiency.

It should be understood that the contact area between each thermal management component 12 and the second wall 21b of the battery cell 20 in the embodiments of the present application may be set according to actual applications. The contact area refers to the area of the region of the thermal management component 12 that exchanges heat with the second wall 21b of the battery cell 20. By contact here may refer to the direct contact between the thermal management component 12 and the second wall 21b, or may refer to the indirect contact between the thermal management component 12 and the second wall 21b by means of a thermally conductive adhesive, a thermally conductive pad, etc. For example, the value range of a ratio of the thickness D of the thermal management component 12 in the first direction X to an area ratio S is [0.5 mm, 200 mm]. The area ratio S is a ratio of the contact area between the second wall 21b and the thermal management component 12 to the area of the second wall 21b.

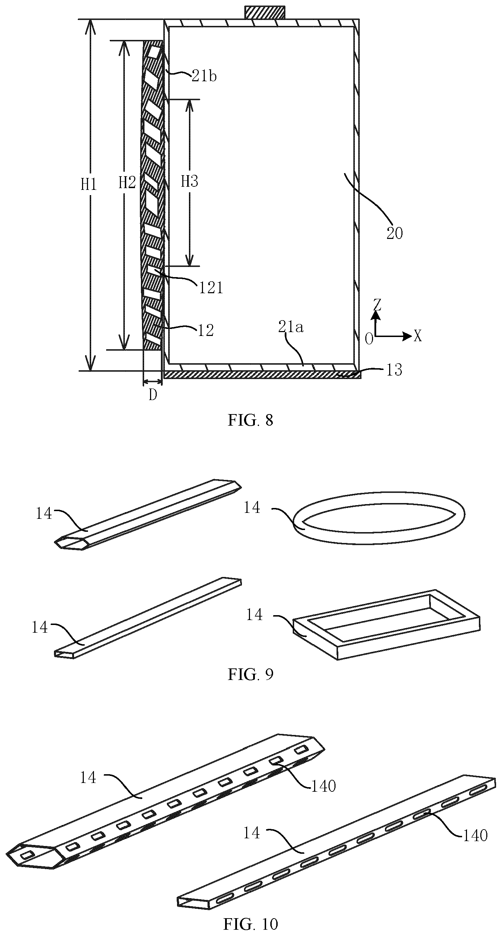

Fig. 7 shows a schematic diagram of any row of battery cells 20 of the battery 10 and the correspondingly provided thermal management components 12 according to an embodiment of the present application; and Fig. 8 shows a partial schematic cross-sectional view of a battery 10 according to an embodiment of the present application. For example, Fig. 8 may be a schematic cross-sectional view of the battery 10 along the C-C' direction shown in Fig. 7. Since each thermal management component 12 can correspond to a plurality of battery cells 20, for ease of description, as shown in Figs. 7 and 8, any thermal management component 12 and any battery cell 20 in contact with this thermal management component 12 are taken as an example in the embodiments of the present application.

As shown in Figs. 7 and 8, the thermal management component 12 in the embodiments of the present application may include at least a partial region in contact with the second wall 21b, or may include at least a partial region not in contact with the second wall 21b. Specifically, taking the height direction Z of the battery cell 20 as an example, the height H1 of the second wall 21b may be greater than or equal to or less than the height H2 of the thermal management component 12, the height H3 of the region of the thermal management component 12 that is in contact with the second wall 21b may be less than or equal to the height H1 of the second wall 21b, and the height H3 of the region of the thermal management component 12 that is in contact with the second wall 21b may be less than or equal to the height H2 of the thermal management component 12. Correspondingly, the area of the second wall 21b may be greater than or equal to or less than that of the thermal management component 12, the area of the region of the thermal management component 12 that is in contact with the second wall 21b may be less than or equal to that of the second wall 21b, and the area of the region of the thermal management component 12 that is in contact with the second wall 21b may be less than or equal to that of the thermal management component 12, so that at least a partial region of the thermal management component 12 is in contact with at least a partial region of the second wall 21b.

It should be understood that since the thermal management component 12 may correspond to a plurality of battery cells 20, the area of the thermal management component 12 above refers to the area of the thermal management component 12 corresponding to one battery cell 20. For example, as shown in Figs. 7 and 8, the thermal management component 12 may correspond to six battery cells 20, and the area of the thermal management component 12 above refers to the area obtained by dividing the total area of the surface of the thermal management component 12 facing the second walls 21b of the battery cells 20 by six, that is, the area of the thermal management component 12 corresponding to one battery cell 20.

Since the thermal management component 12 may be partly in contact with the second wall 21b, the value range of the area ratio S in the embodiments of the present application may be set to [0.1, 1], so that at least a partial region of the thermal management component 12 is in contact with the second wall 21b.

Optionally, the thickness D of the thermal management component 12 in the embodiments of the present application may refer to the average thickness of the thermal management component 12, or may refer to the average thickness of the region of the thermal management component 12 corresponding to the second wall 21b of the battery cell 20, but the embodiments of the present application are not limited thereto. For example, in order to facilitate machining, the thermal management component 12 in the embodiments of the present application is generally a plate-shaped structure with uniform thickness.

The value range of the thickness D of the thermal management component 12 in the embodiments of the present application may generally be set to [0.5 mm, 20 mm]. If the thickness D is set too small, the thermal management component 12 is difficult to machine, has a small strength, and is thus likely to be broken during assembly, reducing the manufacture efficiency of the battery 10. Conversely, if the thickness D is set too large, the thermal management component 12 will occupy a large space, reducing the space utilization rate of the battery 10, and thus reducing the energy density of the battery 10. Therefore, the thickness D of the thermal management component 12 should not be set too large or too small.

It should be understood that the value of D/S in the embodiments of the present application also should not be set too large or too small. If the D/S is set too small, assuming that the area ratio S takes a constant value, the thickness D of the thermal management component 12 will be too small, then the thermal management component 12 is difficult to machine, has a small strength, and is thus likely to be broken during assembly, reducing the manufacture efficiency of the battery 10. Conversely, if the D/S is set too large, the thickness D of the thermal management component 12 may be large, and the thermal management component 12 thus occupies a large space, reducing the space utilization rate of the battery 10, and thus reducing the energy density of the battery 10, or possibly affecting the power demand of the battery 10; and the area ratio S may be too small, that is, the contact area between the thermal management component 12 and the second wall 21b of the battery cell 20 is too small, resulting in less efficient temperature regulation.

Therefore, the value range of the ratio of the thickness D of the thermal management component 12 to the area ratio S in the embodiments of the present application may generally be set to [0.5 mm, 200 mm]. For example, the ratio of the thickness D of the thermal management component 12 to the area ratio S may be equal to 0.5 mm, 1 mm, 2 mm, 3 mm, 4 mm, 5 mm, 10 mm, 20 mm, 30 mm, 40 mm, 50 mm, 60 mm, 70 mm, 80 mm, 90 mm, 100 mm, 120 mm, 140 mm, 160 mm, 180 mm or 200 mm. For another example, the ratio of the thickness D of the thermal management component 12 to the area ratio S may also be set to other values. For example, the value range of the ratio may be set to [0.5 mm, 4 mm] or [1 mm, 4 mm].

It should be understood that the electrical cavity 11a in the embodiments of the present application is described above with reference to the accompanying drawings, and the collection cavity 11b in the embodiments of the present application will be described below with reference to the accompanying drawings.

In the embodiments of the present application, the battery 10 further includes: a support member 14 arranged in the collection cavity 1 1b. The support member 14 is configured to increase the compressive strength of the collection cavity 11b. Compared with a hollow cavity structure, since the support member 14 provides a support function in the collection cavity 1 1b, the collection cavity 11b provided with the support member 14 has a better compressive strength. In other words, when an external pressure acts on the battery 10, the collection cavity 11b provided with the support member 14 can resist most or all of the external pressure, thereby reducing or eliminating the impact of the external pressure on the battery cell 20, the thermal management component 12 and other components in the electrical cavity 11a, and improving the compression resistance and the safety performance of the battery 10.

In some application scenarios, the battery 10 may be mounted to a chassis of an electric vehicle, and provide electric power for the driving of the electric vehicle. Specifically, the collection cavity 11b of the battery 10 faces the chassis of the electric vehicle relative to the electrical cavity 11a, and the electric vehicle may be subject to adverse conditions such as bumps and flying stones during driving, which will cause shock and bottom ball impact to the chassis of the electric vehicle and even the battery 10 mounted to the chassis. Through the technical solutions of the embodiments of the present application, the support member 14 in the collection cavity 11b can provide good anti-shock and anti-bottom ball impact functions, and reduce or eliminate the influence on the battery 10 caused by the adverse conditions encountered by the electric vehicle during driving, and enhance the compression resistance and the safety performance of the battery 10, thereby further improving the safety performance of the electric vehicle.

It can be understood that Figs. 3 and 5 are only examples, showing possible schematic views of a support member 14 arranged in the collection cavity 11b, which should not limit the scope of protection of the present application. In addition to the embodiments shown in Figs. 3 and 5, the support member 14 provided in the embodiments of the present application may also be in other forms, and/or be arranged in other positions of the collection cavity 11b, so as to provide support for the collection cavity 11b and to increase the compressive strength of the collection cavity 11b. The embodiments of the present application do not specifically limit the shape and position of the support member 14.

In order to provide a good support performance, Fig. 9 shows a schematic perspective view of several support members 14 provided by the present application. As shown by the two support members 14 on the left side in Fig. 9, the support member 14 in the embodiments of the present application may be of a strip-shaped structure, for example, may be a rectangular strip or a diamond-shaped strip. The strip-shaped structure is relatively convenient to machine, and can be flexibly mounted in a regularly or irregularly shaped cavity. For example, if the collection cavity 11b is a cuboid, the support member 14 of a strip-shaped structure is conveniently mounted in the collection cavity 11b parallel to the long side or the short side of the collection cavity 11b.

As shown by the two support members 14 on the right side in Fig. 9, the support member 14 in the embodiments of the present application may also be of a ring-shaped structure, for example, may be a circular ring structure or a square ring structure. The ring-shaped support member 14 is suitable for a cavity having a regular shape and provides comprehensive support for the cavity. For example, if the collection cavity 11b is a cuboid, the ring-shaped support member 14 may be correspondingly arranged in the center of the collection cavity 11b.

Optionally, the support member 14 includes a channel configured to allow at least part of the emissions to pass through. In addition to providing a support function, the support member 14 may also be configured to form a channel through which the emissions of the battery cell 20 pass. Specifically, the support member 14 may be configured such that the support member 14 includes at least a part of the channel; or a channel through which the emissions pass may be formed between the support member 14 and the wall of the collection cavity 11b; or, if a plurality of support members 14 are provided, a channel through which the emissions pass may also be formed between the plurality of support members 14.

In this implementation, the arrangement of the support member 14 in the collection cavity 1 1b will not affect the discharge of the emissions from the battery cell 20, so as to ensure the safety performance of the battery cell 20. In addition, compared with a hollow collection cavity 11b, the channel formed by the support member 14 can also prolong the discharge path of the emissions in the collection cavity 11b, reduce the temperature of the emissions after being discharged from the box body 11, and further improve the safety performance of the battery 10 and the electrical apparatus where the battery is located.

Optionally, in some implementations, an aperture 140 may be provided in the support member 14 in the embodiments of the present application, and the aperture 140 is configured to form a channel in the support member 14 to allow the emissions discharged from the battery cell 20 through the pressure relief mechanism 213 to pass through.

Optionally, the aperture 140 configured to form the channel has a plurality of arrangements. As an example, if the support member 14 is a solid structural support member, the aperture may be an aperture penetrating the support member 14 for forming a channel through which the emissions of the battery cell 20 pass. If the support member 14 is of a hollow structure, the aperture 140 may be configured to penetrate the wall of the support member 14, and the aperture 140 may be configured to communicate the internal hollow cavity of the support member 14 and the collection cavity 11b. The aperture 140 and the hollow cavity are both used to form the channel for the emissions of battery cell 20.

In the embodiments of the present application, the support member 14 is of a hollow structure. Compared with a support member 14 of a solid structure, the support member 14 of the hollow structure provides support for the collection cavity 11b and increases the compressive strength, while the weight of the support member 14 itself is small, so that no large additional weight will be added to the battery 10, thereby improving the energy density of the battery 10. Moreover, the support member 14 of the hollow structure having the aperture 140 will not occupy too much space in the collection cavity 11b, so that it is possible to ensure that there is enough space in the collection cavity 11b to receive and collect the emissions of the battery cell 20. Therefore, the embodiments of the present application is illustrated by taking a support member 14 is of a hollow structure as an example.

Optionally, the support member 14 is of a tubular structure. Specifically, as shown in Fig. 9, the support member 14 in the embodiments of the present application may be of a hollow tubular structure having a high axial rigidity, and its radial dimension may be adapted to the height of the collection cavity 11b, so that a good support can be provided for the collection cavity 11b.

In some implementations, the cross-section of the tubular structure is a polygon, and the number of sides of the polygon is greater than or equal to 4, so as to improve the stability of the tubular structure in the collection cavity 11b. In some other implementations, the cross-section of the tubular structure may also be circular, racetrack-shaped or other shapes, which will not be specifically limited in the embodiments of the present application.

As an example, the tubular structure is strip-shaped or ring-shaped. Specifically, as shown by the two support members 14 on the left side in Fig. 9, the support member 14 may be of a strip-shaped tubular structure. For example, the cross-section of the support member 14 is a hollow hexagon or a hollow quadrilateral. As shown by the two support members 14 on the right side in Fig. 9, the support member 14 may also be of a ring-shaped tubular structure, and the cross-section of the support member 14 is circular or hollow quadrilateral.

Optionally, the support member 14 of the tubular structure provided in the embodiments of the present application may have a wall thickness between 0.5mm and 3mm, so that the rigidity and the compressive strength of the support member 14 of the tubular structure can be ensured, and the support member will not occupy a large space in the collection cavity 11b.

In addition, the material of the support member 14 provided in the embodiments of the present application may be a material with a good ductility and a high strength, which can buffer and resist external pressure, and has a high compressive strength. As an example, the material of the support member 14 may be a metal material, such as copper and aluminum. Alternatively, the material of the support member 21 may also be a non-metallic material with a certain strength, such as mica and ceramics.

Therefore, the support member 14 provided in the embodiments of the present application has a good ductility, a high axial rigidity, and a high compressive strength, and thus can provide good support for the collection cavity 11b and increase the compressive strength of the collection cavity 11b. Moreover, when the support member 14 is of a hollow structure, such as a tubular structure, the support member 14 can not only increase the compressive strength of the collection cavity 11b, but also form a channel, which is configured to allow the emissions of the battery cell 20 to pass through, in the support member 14, so that there is enough space in the collection cavity 11b to collect the emissions.

Based on the support member 14 shown in Fig. 9 above, Fig. 10 shows a schematic perspective view of two further support members 14 provided by the present application. As shown in Fig. 10, the support member 14 is provided with an aperture 140. The aperture 140 is configured to form the channel in the support member 14. Specifically, the support member 14 of the tubular structure is provided with an aperture 140, and the aperture 140 may be provided in at least a part of the wall of the tubular structure. For example, the aperture 140 may be provided in a plurality of side walls of a hexagonal tubular structure or in a plurality of side walls of a quadrangular tubular structure. In each side wall, a plurality of apertures 140 may be provided. The plurality of apertures 140 are arranged in an axial direction of the tubular structure. Optionally, the shape of the aperture 140 may be a rounded rectangle, a circle or any other shape.

Based on the embodiment shown in Fig. 10, the support member 14 is of a tubular structure, and on the basis that the internal cavity of the tubular structure provides a channel for the emissions, a channel through which the emissions pass is also formed between the aperture 140 and the cavity of the tubular structure. Moreover, if a plurality of apertures 140 are provided, a channel through which the emissions pass may also be formed between the plurality of apertures 140 provided in the tubular structure.

It can be understood that Fig. 10 is only for illustration, showing several possible arrangements of the aperture 140 when the support member 14 is of a tubular structure. If the support member 14 is of other hollow structures, the arrangement of the aperture 140 can also refer to relevant descriptions in the context. In addition, if the support member 14 is of a solid structure, the aperture 140 may be an aperture penetrating the support member 14. In addition to the difference in the depth of the aperture, other related technical solutions can also refer to the relevant descriptions in the context, which will not be repeated here.

Optionally, the channel of the support member 14 is configured to allow gases in the emissions to pass through, and a region of the support member 14 other than the channel is configured to block solids in the emissions. For example, the channel formed by the aperture 140 in the support member 14 may be used to all gases and/or liquids in the emissions to pass through, while other regions of the support member 14 may be used to block solids in the emissions. As described above, the emissions from the battery cell 20 include, but are not limited to, an electrolytic solution, dissolved or split positive and negative electrode plates, fragments of a separator, high-temperature and high-pressure gas generated by reaction, sparks, etc., all of which are high-temperature substances. If solid substances such as high-temperature positive and negative electrode plates, high-temperature separator fragments, and sparks are directly discharged out of the box body 11 through a discharge valve, there will be a relatively large safety hazard. Through the technical solutions of the embodiments of the present application, the aperture 140 can allow high-temperature gases and/or high-temperature liquids in the emissions to pass through, while the other regions of the support member 14 block high-temperature solids in the emissions. That is, the aperture 140 in the support member 14 can filter the high-temperature solids from the emissions, block the high-temperature solids inside the support member 14, and prevent the high-temperature solids in the emissions from being discharged out of the box body 11 to cause safety hazards, thereby improving the safety of the battery 10 and the electrical apparatus where the battery is located.

In order to improve the filtering effect of the aperture 140, the mesh number of apertures 140 in the support member 14 may be 5 or more. Moreover, the diameter of the aperture 140 in the support member 14 may be within 4 mm to avoid discharge of larger particles. The mesh number refers to the number of holes per inch in a screen, and the greater the mesh number, the more holes there are. In the embodiments of the present application, the mesh number of the apertures 140 in the support member 14 is 5 or more, that is, the diameter of the hole is less than about 4 mm, which basically does not affect the support strength of the support member 14.

Optionally, the number of apertures 140 in the support member 14 may be greater than a preset threshold, so that more than a preset number of channels are formed in the support member 14. It is possible to increase the fluidity of the emissions in the support member 14, and form a sufficiently long discharge path, reducing the temperature of the emissions discharged from the box body 11, thereby improving the safety of the battery 10 and the electrical apparatus where the battery is located. Moreover, enough channels can also better filter the high-temperature solids in the emissions, further improving the safety of the battery 10 and the electrical apparatus where the battery is located.

Further, in order to realize the cooling effect of the channel formed in the support member 14 on the emissions, the support member 14 may be provided with a cooling material to further cool the emissions passing through the channel, thereby improving the safety performance of the battery 10 and the electrical apparatus where it is located.

Optionally, in some implementations, the cooling material may be provided on a surface of the support member 14, for example, may be coated on the surface of the support member 14. In some other implementations, if the support member 14 is of a hollow structure, the cooling material may also be provided in the hollow structure.

As an example, the cooling material used in the embodiments of the present application may be a phase change material (PCM) coating. The phase change material can be melted after contacting the high-temperature emissions, to absorb a large amount of heat and cool the emissions.

Through the technical solutions of the embodiments of the present application, the cooling material is provided on the support member 14. When the collection cavity 11b collects the high-temperature emissions from the battery cell, the cooling material provided on the support member 14 can cool the high-temperature emissions, preventing the high-temperature emissions from causing safety hazards, and improving the safety performance of the battery and the electrical apparatus where it is located.

Further, if the support member 14 is of a hollow structure, the cavity of the hollow structure not only provides a channel for the emissions, but can also utilize the space in the cavity and/or the cooling material provided on the surface of the hollow structure such that when the emissions passes through the channel, the cooling material cools the emissions.

The arrangement position and the arrangement manner of the support member 14 in the embodiments of the present application will be described below with reference to the accompanying drawings.

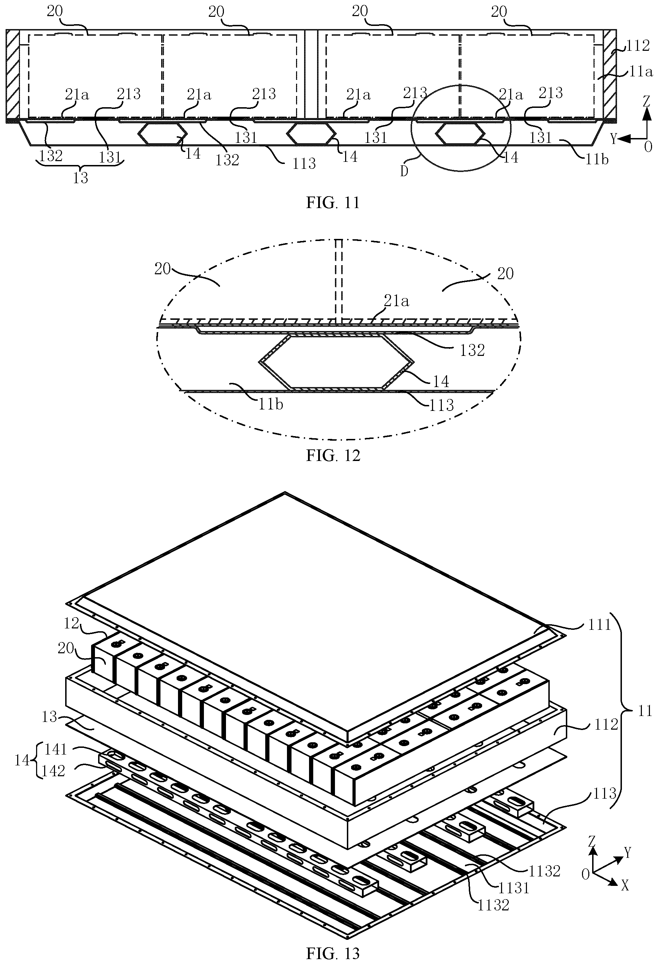

Fig. 11 shows a schematic cross-sectional view of a battery 10 according to an embodiment of the present application. For example, Fig. 11 may be a possible schematic cross-sectional view of the battery 10 shown in Fig. 3, the cross-section being perpendicular to the first direction X. For example, Fig. 11 may be a schematic cross-sectional view along the A-A' direction shown in Fig. 2. Fig. 12 shows a partial schematic cross-sectional view of the battery 10 according to an embodiment of the present application. For example, Fig. 12 may be an enlarged view of a region D shown in Fig. 11. As shown in Figs. 11 and 12, the battery 10 further includes: an isolation component 13 attached to the first wall 21a. The isolation component 13 is configured to isolate the electrical cavity 11a from the collection cavity 11b. The so-called "isolation" here refers to separation, which may or may not be sealed. Specifically, the electrical cavity 11a and the collection cavity 11b are isolated from each other by the isolation component 13, that is, the electrical cavity 11a for accommodating the battery cell 20 and the thermal management component 12 is spatially separated from the collection cavity 11b for collecting the emissions, so that it is possible to prevent at least part of the emissions from entering the electrical cavity 11a from the collection cavity 11b, avoiding thermal diffusion.

In the embodiments of the present application, the isolation component 13 includes a wall shared by the electrical cavity 11a and the collection cavity 11b. As shown in Figs. 11 and 12, the isolation component 13 (or a part thereof) may be directly used as the wall shared by the electrical cavity 11a and the collection cavity 11b, so that the distance between the electrical cavity 11a and the collection cavity 11b can be reduced as much as possible, saving space, and improving the space utilization rate of the box body 11.

Optionally, the isolation component 13 in the embodiments of the present application may also be a thermal management component configured to regulate the temperature of the battery cell 20. Specifically, the isolation component 13 may be configured to accommodate a fluid or a solid-liquid phase change material to regulate the temperature of the battery cell 20. In the case of cooling the battery cell 20, the isolation component 13 may accommodate a cooling medium to regulate the temperature of the battery cell 20. In this case, the isolation component 13 may also be called a cooling component, a cooling system, a cooling plate, etc.

It should be understood that the box body 11 in the embodiments of the present application may be implemented in various ways, which will not be limited in the embodiments of the present application. For example, taking Figs. 11 and 12 as an example, for the electrical cavity 11a, the box body 11 may include a first enclosure body with an opening, and the isolation component 13 covers the opening of the first enclosure body to form the electrical cavity 11a. In this way, the wall for forming the electrical cavity 11a includes the first enclosure body and the isolation component 13. The first enclosure body may also be implemented in various ways. For example, the first enclosure body 110 may be of a hollow integral structure with an opening at one end; or the first enclosure body 110 may include a first part 111 and a second part 112 with openings on two opposite sides respectively, the first part 111 covers the opening on one side of the second part 112, so as to form a first enclosure body with an opening at one end, and the isolation component 13 covers the opening on the other side of the second part 112 to form the electrical cavity 11a. As for the corresponding collection cavity 11b, as shown in Figs. 11 and 12, the box body 11 further includes: a protective member 113. The protective member 113 is configured to form the collection cavity 11b with the isolation component 13. In addition, the protective member 113 may also be configured to protect the isolation component 13, that is, the wall of the collection cavity 11b includes the protective member 113 and the isolation component 13.

For another example, unlike the aforementioned manner shown in Figs. 11 and 12, the box body 11 may further include a closed second enclosure body, which may be configured to form an electrical cavity 11a, or by providing the isolation component 13 inside the second enclosure body, the electrical cavity 11a is isolated inside the second enclosure body. Further, a collection cavity 11b may also be isolated. The second enclosure body may also be implemented in various ways. For example, the second enclosure body may include a third part and a fourth part, one side of the fourth part has an opening to form a semi-closed structure, the isolation component 13 is provided inside the fourth part, and the third part covers the opening of the fourth part to form the closed second enclosure body.

In the embodiments of the present application, the isolation component 13 is provided with a pressure relief region 131. The pressure relief region 131 is configured to discharge the emissions to the collection cavity 11b through the pressure relief region 131 when the pressure relief mechanism 213 is actuated, thereby preventing the emissions from damaging other battery cells 20 in the electrical cavity 11a, avoiding thermal diffusion and thus improving the safety of the battery 10.

Optionally, the isolation component 13 further includes a non-pressure relief region 132, and the non-pressure relief region 132 is a region of the isolation component 13 other than the pressure relief region 131. For example, the non-pressure relief region 132 may be provided with a flow channel, so as to accommodate a fluid or a solid-liquid phase change material in the flow channel to regulate the temperature of the battery cell 20.

Optionally, as an embodiment, the support member 14 is arranged corresponding to the non-pressure relief region 132 of the isolation component 13, so as to form a channel, through which the emissions pass, outside the support member 14. As shown in Figs. 11 and 12, in the embodiments of the present application, the support member 14 is arranged corresponding to the non-pressure relief region 132, and the emissions discharged through the pressure relief region 131 is outside the support member 14, thereby forming a channel, through which the emissions from the battery cell 20 pass, outside the support member 14. For example, a channel may be formed between a plurality of support members 14 or between the support member 14 and the wall of the collection cavity 11b such that the emissions are collected by the collection cavity 11b.

Through the technical solutions of the embodiments of the present application, the support member 14 is arranged corresponding to the non-pressure relief region 132 of the isolation component 13 to prevent the support member 14 from affecting the pressure relief region 131 in the isolation component 13 and the pressure relief mechanism 213 opposite to the pressure relief region. For example, it is possible to prevent the support member 14 from blocking the emissions discharged from the interior of the battery cell 20 through the pressure relief mechanism 213 and the pressure relief region 131, so that the emissions can be collected by the collection cavity 11b. Therefore, the support member 14 configured based on the embodiments of the present application will not affect the safety performance of the battery cell 20 while increasing the compressive strength of the collection cavity 11b.

Optionally, as shown in Figs. 11 and 12, the support member 14 abuts against the non-pressure relief region 132 of the isolation component 13. Specifically, the support member 14 may be in contact with the non-pressure relief region 132 of the isolation component 13, so as to ensure that the support member 14 has a good support effect on the isolation component 13. For example, in the height direction Z of the box body 11, the support member 14 may be arranged below the non-pressure relief region 132.

Optionally, as an example, as shown in Figs. 11 and 12, among the plurality of battery cells 20 arranged in the second direction Y, two adjacent battery cells 20 may be correspondingly provided therebetween with the same support member 14. The extension direction of the support member 14 is the first direction X, that is, two rows of battery cells 20 extending in the first direction X may share the same support member 14. In this way, by correspondingly arranging the support members 14 between two adjacent rows of battery cells 20, it is possible to use a small number of support members 14, so that mounting is facilitated, and the weight of the battery 10 can also be reduced while providing a good support effect.

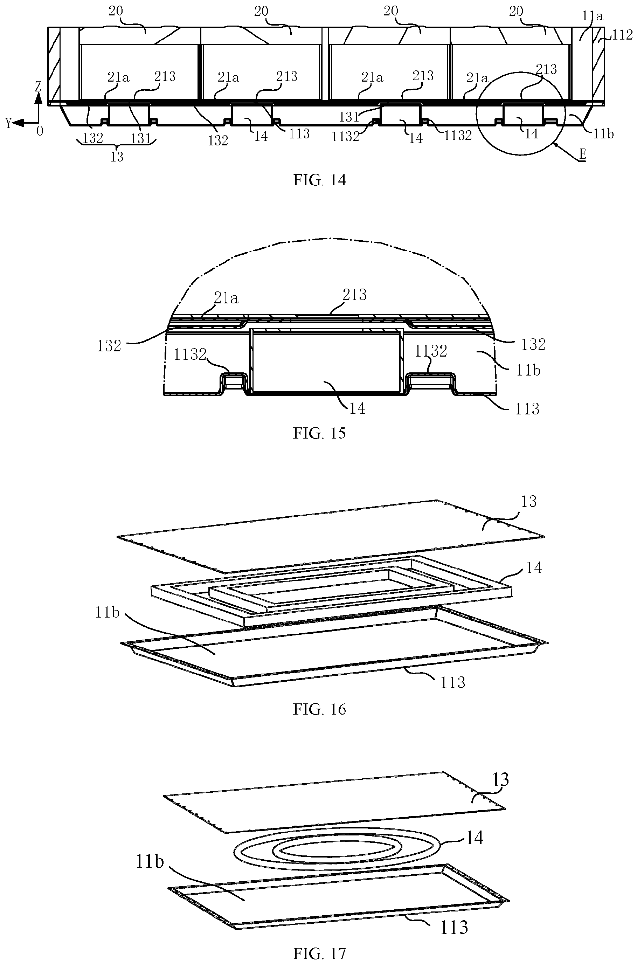

Fig. 13 shows an exploded schematic structural diagram of a battery 10 according to another embodiment of the present application; and Fig. 14 shows a schematic cross-sectional view of a battery 10 according to another embodiment of the present application. For example, the cross-sectional view shown in Fig. 14 may be a cross-sectional view of the battery 10 shown in Fig. 13, the cross-section being perpendicular to the first direction X. Fig. 15 shows a partial schematic cross-sectional view of the battery 10 according to another embodiment of the present application. For example, Fig. 15 may be an enlarged view of a region E shown in Fig. 14. It should be understood that in Fig. 13, the support member 14 having a rectangular cross-section is taken as an example, but the support member 14 may also be configured in other shapes, such as the shapes shown in Figs. 9 and 10, and the embodiments of the present application are not limited thereto.

Optionally, as another embodiment, as shown in Figs. 13 to 15, the support member 14 is provided with a first aperture 141. The first aperture 141 is arranged corresponding to the pressure relief region 131 such that the emissions passing through the pressure relief region 131 are discharged through the first aperture 141. The support member 14 may be of a tubular structure, and a wall of the support member 14 is provided with a first aperture 141, and the first aperture 141 is arranged opposite to the pressure relief region 131 in the isolation component 13. In this way, while the support member 14 implements the support function, the first aperture 141 of the support member 14 also facilitates the receiving of the emissions discharged from the battery cell 20 through the pressure relief mechanism 213 and the pressure relief region 131, and the emissions can be collected into the collection cavity 11b of the box body 11 after passing through the first aperture 141, to prevent the emissions from affecting the components in the electrical cavity 11a.

It should be understood that the first aperture 141 is in communication with the corresponding pressure relief region 131, so as to achieve a good conduction effect of the first aperture 141 on the emissions.

In addition, the cross-sectional area of the first aperture 141 is not less than the area of the pressure relief region 131, so as to further improve the good conduction effect of the first aperture 141 on the emissions, and prevent the first aperture 141 from blocking the emissions from entering the collection cavity 11b.

Optionally, as shown in Figs. 13 to 15, a plurality of battery cells 20 arranged in the first direction X may be provided with the same strip-shaped support member 14 correspondingly, and each strip-shaped support member 14 is correspondingly arranged below the pressure relief mechanisms 213 of each row of battery cells 20, so that it is possible to use a relatively small number of support members 14 that are easy to mount to achieve a good support effect.

It should be understood that, for each of the above embodiments, as shown in Figs. 11 to 15, the pressure relief region 131 of the isolation component 13 in the embodiments of the present application may be implemented in various ways. For example, the pressure relief region 131 in the isolation component 13 may not be treated in any special way. The embodiments of the present application only refers to a partial region of the isolation component 13 opposite to the pressure relief mechanism 213, which is called the pressure relief region 131.

For another example, the pressure relief region 131 in the isolation component 13 may also be specially treated such that the pressure relief region can be more easily damaged when the pressure relief mechanism 213 is actuated.

As an example, the pressure relief region 131 is a weakened region configured to be capable of being damaged when the pressure relief mechanism 213 is actuated, such that the emissions pass through the weakened region and enter the collection cavity 11b. Configuring the pressure relief region 131 as a weakened region can make the isolation component 13 in a relatively sealed state when the pressure relief mechanism 213 is not actuated, for example, during normal use of the battery 10, effectively protecting the pressure relief mechanism 213 from being damaged and failed due to external force. In addition, when the pressure relief mechanism 213 is actuated, the strength of the weakened region is less than that of other regions in the isolation component 13 except the pressure relief region 131, and the weakened region is thus easily damaged, so that the emissions from the battery cell 20 provided with the pressure relief mechanism 213 are discharged out of the electrical cavity 11a through the weakened region, for example, may pass through the weakened region into the collection cavity 11b.

Optionally, the isolation component 13 is provided with a groove arranged opposite to the pressure relief mechanism 213, and a bottom wall of the groove forms the weakened region. Since the bottom wall of the groove is weaker than other regions of the isolation component 13 and is easily damaged by the emissions, the emissions may damage the bottom wall of the groove and enter the collection cavity 11b when the pressure relief mechanism 213 is actuated.

Optionally, a weakened region may also be formed in the isolation component 13 as the pressure relief region 131 in other ways. For example, an indentation is provided in the isolation component 13 to form the weakened region, etc., which will not be specifically limited in the present application.

As another embodiment, the pressure relief region 131 is a first through hole configured such that when the pressure relief mechanism 213 is actuated, the emissions can enter the collection cavity 1 1b through the first through hole. When the pressure relief region 131 is the first through hole, the machining is facilitated, and the emissions discharged through the pressure relief mechanism 213 can be also released more quickly.

In the embodiments of the present application, as shown in Figs. 11 to 15, the support member 14 abuts against the isolation component 13 and/or the protective member 113. In this way, the support member 14 can provide a support function for the protective member 113 and/or the isolation component 13, so as to improve the overall compressive strength of the protective member 113 and/or the isolation component 13. Especially, when abutting against both the protective member 113 and the isolation component 13, the support member 14 can improve the compressive strength of the protective member 113 and the isolation component 13 as a whole, thereby preventing external pressure from affecting the battery cell 20 and other components in the electrical cavity 11a.

Optionally, a connection surface of the support member 14 abuts against the isolation component 13 and/or the protective member 113, and a non-connection surface of the support member 14 is provided with a second aperture 142 to form a channel, through which the emissions pass, in the support member 14. Specifically, the connection surface of the support member 14 is the surface that is in contact with the isolation component 13 and/or the protective member 113. On the contrary, the non-connection surface of the support member 14 is the surface of the support member 14 that is not in contact with the isolation component 13 and the protective member 113. The non-connection surface of the support member 14 may be provided with a second aperture 142 to form a channel, through which the emissions pass, in the support member 13, so as to add a discharge path of the emissions from the battery cell 20.

Optionally, if the support member 14 is of a quadrangular tubular structure, the first aperture 141 may be provided in any side wall of the quadrangular tubular structure, and the other side walls of the quadrangular tubular structure may also be provided with second apertures 142. The first aperture 141 and the second apertures 142 may be both configured to form discharge channels through which the emissions of the battery cell 20 pass. If the support member 14 is of a hexagonal tubular structure, similar to the quadrangular tubular structure, the first aperture 141 is provided in one side wall of the hexagonal tubular structure, and the other side walls of the hexagonal tubular structure may also be provided with second apertures 142.

Optionally, the sizes of the first aperture 141 and the second aperture 142 may be different or the same. For example, the size of the first aperture 141 is greater than the size of the second aperture 142, so that the first aperture 141 with a larger size can allow the emissions discharged through the pressure relief mechanism 213 to smoothly pass through without blocking the discharge of the emissions, whereas the second aperture 142 with a smaller size can provide a filtering function, that is, the second aperture 142 allows the high-temperature gases and/or high-temperature liquids in the emissions to pass through, and the support member 14 blocks the high-temperature solids in the emissions, to prevent the high-temperature solids in the emissions from being discharged out of the box body 11 to cause potential safety hazards, thereby improving the safety of the battery and the electrical apparatus where the battery is located.

Optionally, the shapes of the first aperture 141 and the second aperture 142 may also be the same or different. For example, the shape of the first aperture 141 may be kept consistent with that of the pressure relief mechanism 213 or the pressure relief region 131, so as to facilitate the smooth and timely passage of the emissions; whereas the shape of the second aperture 142 is generally set to be rectangular or circular, so as to facilitate machining.

Optionally, the numbers of first apertures 141 and second apertures 142 may also be the same or different. For example, the number of first apertures 141 may be kept consistent with that of corresponding pressure relief mechanisms 213 or pressure relief regions 131, so that the first apertures 141 correspond to the pressure relief mechanisms 213 on a one-to-one basis, or correspond to the pressure relief regions 131 on a one-to-one basis; and the number of second apertures 141 may be flexibly set according to actual applications.

It should be understood that the support member 14 in the embodiments of the present application may be arranged in the collection cavity 11b by various fixing means, so as to prevent the support member 14 from moving in the collection cavity 11b and affecting the reliability of the battery 10.

For example, in an implementation, the protective member 113 and the support member 14 are of an integral structure. Optionally, the support member 14 and the protective member 113 may form an integral structure by welding or other processes, so as to facilitate subsequent mounting.

For another example, in another implementation, the isolation component 13 and/or the protective member 113 forming the collection cavity 11b is provided with a fixing member configured to fix the support member 14. Optionally, the fixing member includes but is not limited to an adhesive layer, a bolt, a snap groove, etc.

For example, as shown in Figs. 13 to 15, taking a strip-shaped support member 14 as an example, the protective member 114 may be provided with a U-shaped groove 1131, such that the strip-shaped support member 14 is arranged in the U-shaped groove 1131. The strip-shaped support member 14 extends in the first direction X, and correspondingly, the strip-shaped U-shaped groove 116 also extends in the first direction X. The length of the strip-shaped U-shaped groove 116 is approximately equal to that of the strip-shaped support member 14. Similarly, the width of the U-shaped groove 1131 is also approximately equal to that of the support member 14, so that the support member 14 is fixedly arranged on the protective member 113. However, the depth of the U-shaped groove 1131 may be less than or equal to the height of the support member 14, so as to reduce the machining difficulty of and the space occupied by the U-shaped groove 1131. Through this implementation, the mounting of the support member 14 is simple, and the support member 14 is convenient to be dismounted and replaced, and the mounting efficiency and the maintenance efficiency of the box body 11 of the battery 10 are improved.

Optionally, the U-shaped groove 1131 may be implemented in various ways. For example, as shown in Figs. 13 to 15, the protective member 113 forms protrusions 1132 facing the interior of the box body 11, and the U-shaped groove 1131 may be formed between adjacent protrusions 1132. Through the technical solutions of the embodiments of the present application, the protective member 113 is directly used to form the protrusions 1132 and the U-shaped groove 1131, so that it is possible to avoid the use of additional structural members to form the U-shaped groove 1131 and reduce the manufacturing cost. In addition, it is also possible to prevent the additional structural members from causing adverse effects on the protective member 113, the support member 14 and other components in the box body 11, thereby improving the safety and reliability of the battery 10.

Alternatively, as an alternative solution, in the embodiments of the present application, an additional structural member may be used, which is arranged on the protective member 113, so as to form a U-shaped groove 1131 on the protective member 113.

It should be understood that Figs. 13 to 15 only schematically show the schematic diagrams of the strip-shaped support member 14 and the strip-shaped U-shaped groove 116. If the support member 14 has other shapes, such as a circular ring or a square ring, the U-shaped groove 116 may also be configured as a ring-shaped, U-shaped groove to adapt to the ring-shaped support member 14.

Furthermore, in addition to the support member 14 being fixedly arranged on the protective member 113 via the U-shaped groove 1131, the support member 14 may also be fixed by means of a bolt or other types of fixing members. For example, the protective member 113 is provided with a fixing bolt, which can pass through the support member 14 to support and fix the support member 14. Optionally, the bolt may pass through an aperture in the support member 14 and be connected to another structural member of the box body 11 to enhance the stability of the support member 14. In some implementations, the bolt may pass through an aperture of the support member 14, pass through the isolation component 13, and then be fixed to the isolation component 13. Through these implementations, the bolt can not only reinforce the fixing of the support member 14, but can also reinforce the fixing of the isolation component 13. While enhancing the overall stability of the box body 11, the relative movement between the support member 14 and the isolation component 13 is also prevented, avoiding the influence of the support member 14 on the isolation component 13 and improving the safety of the battery 10.

The arrangement of the support member 14 in the embodiments of the present application will be described in detail below with reference to the accompanying drawings. In the embodiments of the present application, the arrangement of the support member 14 in the collection cavity 11b is related to the position of the battery cell 20. Specifically, the arrangement of the support member 14 in the collection cavity 11b is related to the position of the pressure relief mechanism 213 in the battery cell 20 and is also related to the pressure relief region 141 of the isolation component 14.

Optionally, as an embodiment, the battery 10 includes a plurality of tubular structures arranged at intervals in the collection cavity 11b. The plurality of support members 14 arranged at intervals can provide uniform and comprehensive support for the collection cavity 11b, thereby uniformly and comprehensively increasing the compressive strength of the collection cavity 11b.

Optionally, the support members 14 of different shapes may be arranged at intervals in the collection cavity 11b in different ways. For example, for the strip-shaped support members 14, as shown in Figs. 13 to 15, the plurality of strip support members 14 are arranged at intervals in the collection cavity 11b, and the axial directions of the plurality of support members 14 may all be parallel to the first direction X. Alternatively, the plurality of strip-shaped support members 14 may also be arranged in the collection cavity 11b in other ways. For example, the axial directions of the plurality of support members 14 may be parallel to the second direction Y The first direction X is perpendicular to the second direction Y

For another example, Figs. 16 and 17 respectively show other possible arrangements of the support members 14 in the collection cavity 1 1b in the embodiments of the present application. As shown in Fig. 16, in this implementation, a plurality of support members 14 are in the form of a square ring or a frame. The plurality of support members 14 are arranged around the center of the collection cavity 11b, the size of the support member 14 close to the center of the collection cavity 11b is smaller, the size of the support member 14 away from the center of the collection cavity 11b is larger, and there is a gap between two adjacent support members 14, so that the plurality of support members 14 are arranged spaced apart from each other in the collection cavity 11b.

Similarly, as shown in Fig. 17, in this implementation, a plurality of support members 14 are ring-shaped, and the arrangement of the plurality of ring-shaped support members 14 is similar to the arrangement of the plurality of square ring-shaped support members 14 described above. Details are not repeated here for the sake of brevity.

Optionally, in the above embodiments shown in Figs. 16 and 17, the square ring-shaped or circular ring-shaped support member 14 may be of a hollow tubular structure. Optionally, the support member 14 may also be provided with an aperture, for example, may include a first aperture 141 and/or a second aperture 142. Details are not repeated here for the sake of brevity.

Optionally, a plurality of support members 14 may be arranged symmetrically in the collection cavity 11b to improve the stability of the collection cavity 11b, thereby improving the mounting stability of the box body 11 in its device. Specifically, as shown in Figs. 13 to 15, a plurality of strip-shaped support members 14 may be symmetrically distributed in the collection cavity 11b in the first direction X, or may be symmetrically distributed in the collection cavity 11b in the second direction Y. As shown in Figs. 16 and 17, each support member 14 of the plurality of ring-shaped support members 14 is arranged around the center of the collection cavity 11b, and each support member is arranged symmetrically with respect to the center of the collection cavity 11b.

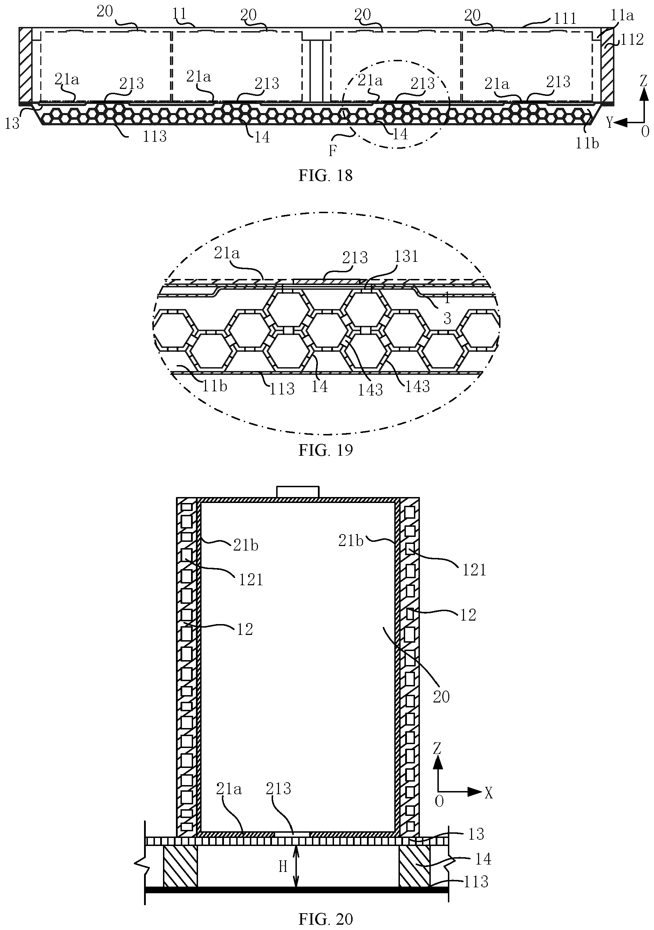

Optionally, as another embodiment, a plurality of support members 14 may also be stacked on top of each other in the collection cavity 11b. Fig. 18 shows a schematic cross-sectional view of a battery 10 according to yet another embodiment of the present application, the cross-section being perpendicular to the first direction X. For example, the difference between the battery 10 shown in Fig. 18 and the battery 10 shown in Figs. 13 to 15 lies in the structure of the support member 14. Fig. 19 shows a partial schematic cross-sectional view of a battery 10 according to yet another embodiment of the present application. For example, Fig. 19 may be an enlarged view of a region F shown in Fig. 18.

Optionally, as shown in Figs. 18 and 19, the battery 10 includes a plurality of tubular structures, which are stacked on top of each other. The cross-sections of the plurality of tubular structures are in the form of a honeycomb. The arrangement of tubular support members 14 in the form of a honeycomb having a single-point yield, high axial rigidity, and high compressive strength in the collection cavity 11b of the box body 11 of the battery 10 can increase the compressive strength of the collection cavity 11b, thereby improving the safety performance of the battery 10 and the electrical apparatus where the battery is located.

Specifically, as shown in Figs. 18 and 19, a plurality of support members 14 may be of a hexagonal tubular structure, the plurality of support members 14 of the hexagonal tubular structure may be stacked on top of each other and connected to each other, and the axial directions of the plurality of support members 14 of the hexagonal tubular structure are parallel to the first direction X, so that the cross-sections of the plurality of support members 14 of the hexagonal tubular structure are of a honeycomb structure.

As shown in Figs. 18 and 19, in the first direction X, the length of each support member 14 of the plurality of support members 14 of the hexagonal tubular structure is approximated to that of the collection cavity 11b; and in the second direction Y, the overall width of the plurality of support members 14 of the hexagonal tubular structure is approximated to that of the collection cavity 1 1b. In other words, in the embodiments of the present application, the plurality of support members 14 of the hexagonal tubular structure can relatively fully cover the collection cavity 11b in the first direction X and in the second direction Y. In addition, the plurality of support members 14 of the hexagonal tubular structure are connected to each other, and the support members 14 have a higher density in the collection cavity 1 1b, so that the compressive strength of the collection cavity 11b is improved comprehensively and densely.

Optionally, as shown in Figs. 18 and 19, a plurality of support members 14 of a tubular structure are arranged in the protective member 113 of the box body 11, and at least some of the support members 14 of the plurality of support members 14 of a hexagonal tubular structure are in contact with the isolation component 13. For example, there are some support members 14 in contact with the pressure relief region 131 of the isolation component 13 that corresponds to the pressure relief mechanism 213 of the battery cell.

Optionally, in the embodiments of the present application, the support member 14 may be provided with a second through hole 143 to form a channel for the emissions. Specifically, connection surfaces of two interconnected tubular structures are provided with a second through hole 143 penetrating through the connection surfaces of the two tubular structures. The second through hole 143 is configured to form a channel, through which the emissions pass, in the two tubular structures.

As shown in Figs. 18 and 19, in the embodiments of the present application, a wall of the support member 14 of a tubular structure may be provided with a second through hole 143. For example, the connection surfaces of the interconnected support members 14 are provided with second through holes 143 corresponding to each other, and the second through holes 143 corresponding to each other are configured to form channels, through which the emissions pass, in the two support members 14 of the tubular structure. In addition, the second through hole 143 in the non-connection surface of the support member 14 may form a channel between the support member 14 and the collection cavity 11b.

Through the technical solutions of the embodiments of the present application, a large number of support members 14 are provided and connected to each other. In addition to providing relatively stable support for the collection cavity 11b, the second through hole 143 provided in the support member 14 can provide a channel between the interconnected support members 14, and a channel between the support member 14 and the collection cavity 11b. Therefore, through this implementation, a large number of channels can be formed in the support members 14, the discharge path of the emissions from the battery cell 20 in the channel can be added, the temperature of the emissions discharged from the collection cavity 11b can be reduced, and the safety performance of the battery 10 can be improved.

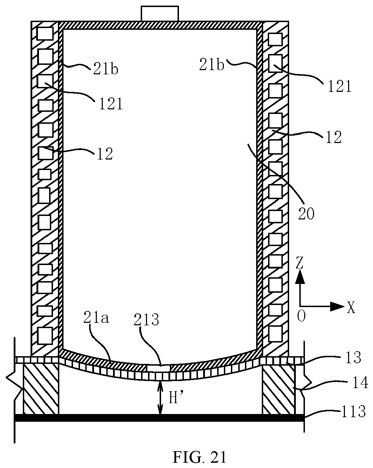

Fig. 20 shows a possible partial schematic cross-sectional view of a battery 10 according to an embodiment of the present application. For example, Fig. 20 shows a partial schematic view of any battery cell 20 in a normal use state and a corresponding collection cavity 1 1b in the battery 10. Fig. 21 shows another possible partial schematic cross-sectional view of a battery 10 according to an embodiment of the present application. For example, Fig. 21 shows a partial schematic view of any battery cell 20 subjected to thermal runaway and a corresponding collection cavity 11b in the battery 10. Optionally, the battery 10 shown in Figs. 20 and 21 may be the battery 10 in any embodiment of the present application.

As shown in Figs. 20 and 21, in the normal use state, a minimum distance between the region of the isolation component 13 corresponding to the pressure relief mechanism 213 and the protective member 113 is H. When the battery cell 20 is subjected to thermal runaway, the pressure relief mechanism 213 is actuated, and the isolation component 13 will be deformed along with the battery cell 20, so that the isolation component 13 is deformed toward the collection cavity 11b. At this time, the minimum distance between the region of the isolation component 13 corresponding to the pressure relief mechanism 213 and the protective member 113 becomes H'. The distance H is greater than the distance H', and the deformation amount of the isolation component 13 is the difference between the distance H and the distance H'.

In the embodiments of the present application, the minimum distance H between the region of the isolation component 13 corresponding to the pressure relief mechanism 213 and the protective member 113 is greater than or equal to 7 mm, so as to avoid that the distance H is too small to affect the actuation of the pressure relief mechanism 213. In addition, if the distance H is too small, the deformed isolation component 13 will directly come into contact with the protective member 113 below, resulting in a too small gap between the isolation component 13 and the protective member 113, or even no gap, thereby affecting the discharge of the emissions from the pressure relief mechanism 213, so that it is likely to cause the battery cell 20 subjected to thermal runaway to explode and cause thermal diffusion, which reduces the safety of the battery 10.

On the contrary, the value of the distance H in the embodiments of the present application should not be set too large, which will result in that the distance between the isolation component 13 and the protective member 113 is large, the space of the collection cavity 11b is large, and too much space is occupied in the box body 11, leading to a low utilization rate of the space in the box body 11, thereby affecting the energy density of the battery 10.

Therefore, the distance H in the embodiments of the present application should not be set too large or too small. For example, the distance H may be set to be greater than or equal to 7 mm, or the distance H may be set to be less than or equal to 20 mm. For example, the value of the distance H may be equal to 7 mm, 8 mm, 9 mm, 10 mm, 11 mm, 12 mm, 13 mm, 14 mm, 15 mm, 16 mm, 17 mm, 18 mm, 19 mm or 20 mm.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery (10), **characterized by**:
a battery cell (20), a first wall (21a) of the battery cell (20) being provided with a pressure relief mechanism (213);
a thermal management component (12) configured to regulate the temperature of the battery cell (20), the thermal management component (12) being attached to a second wall (21b) of the battery cell (20), and the second wall (21b) being different from the first wall (21a); and
a box body (11), the box body (11) comprising an electrical cavity (11a) and a collection cavity (11b), wherein the electrical cavity (11a) is configured to accommodate the battery cell (20) and the thermal management component (12), and the collection cavity (11b) is configured to collect emissions from the battery cell (20) when the pressure relief mechanism (213) is actuated.

2. The battery (10) according to claim 1, wherein the area of the second wall (21b) is greater than or equal to that of the first wall (21a).

3. The battery (10) according to claim 2, wherein the second wall (21b) is the wall of the battery cell (20) that has the largest area.

4. The battery (10) according to any one of claims 1 to 3, wherein the battery (10) comprises a plurality of rows of battery cells (20) arranged in a first direction, and each row of battery cells (20) of the plurality of rows of battery cells (20) comprises at least one battery cell (20) arranged in a second direction, the first direction being perpendicular to the second direction and the second wall (21b).

5. The battery (10) according to claim 4, wherein the thermal management component (12) is attached to the second wall (21b) of the at least one battery cell (20) of at least one row of battery cells (20) of the plurality of rows of battery cells (20).

6. The battery (10) according to claim 5, wherein the battery cell (20) comprises two second walls (21b) oppositely arranged in the first direction, and on two sides of at least one row of battery cells (20) of the plurality of rows of battery cells (20) in the first direction, provided are the thermal management components (12) attached to the two second walls (21b) of the at least one battery cell (20) respectively.

7. The battery (10) according to any one of claims 4 to 6, wherein among the plurality of rows of battery cells (20), at least two adjacent rows of battery cells (20) are provided therebetween with the same thermal management component (12).

8. The battery (10) according to any one of claims 4 to 7, wherein the battery (10) comprises a plurality of thermal management components (12) arranged in the first direction.

9. The battery (10) according to claim 8, wherein the plurality of thermal management components (12) are arranged at intervals in the first direction.

10. The battery (10) according to claim 8 or 9, wherein the thermal management components (12) are each provided with a heat exchange channel for accommodating a heat exchange medium, and the heat exchange channels of the plurality of thermal management components (12) are in communication with each other.

11. The battery (10) according to any one of claims 1 to 10, wherein the battery (10) further comprises:
a support member (14) arranged in the collection cavity (11b), the support member (14) being configured to increase the compressive strength of the collection cavity (11b).

12. The battery (10) according to claim 11, wherein the support member (14) comprises a channel configured to allow at least part of the emissions to pass through.

13. The battery (10) according to claim 12, wherein the channel is configured to allow gases in the emissions to pass through, and a region of the support member (14) other than the channel is configured to block solids in the emissions.

14. The battery (10) according to claim 12 or 13, wherein the support member (14) is provided with an aperture (140), the aperture (140) being configured to form the channel in the support member (14).

15. The battery (10) according to any one of claims 11 to 14, wherein the battery (10) further comprises:
an isolation component (13) attached to the first wall (21a), the isolation component (13) being configured to isolate the electrical cavity (11a) from the collection cavity (11b).

16. The battery (10) according to claim 15, wherein the isolation component (13) is provided with a pressure relief region (131), the pressure relief region (131) being configured to discharge the emissions to the collection cavity (11b) through the pressure relief region (131) when the pressure relief mechanism (213) is actuated.

17. The battery (10) according to claim 16, wherein the support member (14) is arranged corresponding to a non-pressure relief region (132) of the isolation component (13), so as to form a channel, through which the emissions pass, outside the support member (14).

18. The battery (10) according to claim 17, wherein the support member (14) abuts against the non-pressure relief region (132) of the isolation component (13).

19. The battery (10) according to claim 16, wherein the support member (14) is provided with a first aperture (141), the first aperture (141) being arranged corresponding to the pressure relief region (131) such that the emissions passing through the pressure relief region (131) are discharged through the first aperture (141).

20. The battery (10) according to claim 19, wherein the first aperture (141) is in communication with the corresponding pressure relief region (131).

21. The battery (10) according to claim 19 or 20, wherein the cross-sectional area of the first aperture (141) is not less than the area of the pressure relief region (131).

22. The battery (10) according to any one of claims 16 to 21, wherein the pressure relief region (131) is a weakened region configured to be capable of being damaged when the pressure relief mechanism (213) is actuated, such that the emissions pass through the weakened region into the collection cavity (11b).

23. The battery (10) according to any one of claims 16 to 21, wherein the pressure relief region (131) is a first through hole configured such that when the pressure relief mechanism (213) is actuated, the emissions are capable of entering the collection cavity (11b) through the first through hole.

24. The battery (10) according to any one of claims 15 to 23, wherein the box body (11) further comprises:
a protective member (113), the protective member (113) being configured to form the collection cavity (11b) with the isolation component (13).

25. The battery (10) according to claim 24, wherein the support member (14) abuts against the isolation component (13) and/or the protective member (113).

26. The battery (10) according to claim 25, wherein a connection surface of the support member (14) abuts against the isolation component (13) and/or the protective member (113), and a non-connection surface of the support member (14) is provided with a second aperture (142) to form a channel, through which the emissions pass, in the support member (14).

27. The battery (10) according to claim 25 or 26, wherein the protective member (113) and the support member (14) are of an integral structure.

28. The battery (10) according to any one of claims 24 to 27, wherein a minimum distance between a region of the isolation component (13) corresponding to the pressure relief mechanism (213) and the protective member (113) is greater than or equal to 7 mm.

29. The battery (10) according to any one of claims 11 to 28, wherein the support member (14) is of a hollow structure.

30. The battery (10) according to claim 29, wherein the support member (14) is of a tubular structure.

31. The battery (10) according to claim 30, wherein the cross-section of the tubular structure is a polygon, and the number of sides of the polygon is greater than or equal to 4.

32. The battery (10) according to claim 30 or 31, wherein the tubular structure is strip-shaped or ring-shaped.

33. The battery (10) according to any one of claims 30 to 32, wherein the battery (10) comprises a plurality of tubular structures, which are arranged at intervals in the collection cavity (11b)

34. The battery (10) according to any one of claims 30 to 33, wherein the battery (10) comprises a plurality of tubular structures, which are stacked on top of each other, wherein the cross-sections of the plurality of tubular structures are in the form of a honeycomb.

35. The battery (10) according to claim 34, wherein connection surfaces of two interconnected tubular structures are provided with a second through hole penetrating through the connection surfaces of the two tubular structures, the second through hole being configured to form a channel, through which the emissions pass, in the two tubular structures.

36. An electrical apparatus, comprising:
the battery (10) according to any one of claims 1 to 35, the battery (10) being configured to supply electric energy to the electrical apparatus.
